(19) Europäisches Patentamt
European Patent Office
Office européen des brevets

(11) Publication number: 0 355 585 A2

(12) # EUROPEAN PATENT APPLICATION

(21) Application number: 89114722.5

(51) Int. Cl.4: C25D 9/00 , G02F 1/133

(22) Date of filing: 09.08.89

(30) Priority: 15.08.88 JP 201907/88
26.12.88 JP 326089/88
26.12.88 JP 326090/88
11.04.89 JP 89768/89
01.06.89 JP 137542/89
05.06.89 JP 140981/89

(43) Date of publication of application:
28.02.90 Bulletin 90/09

(84) Designated Contracting States:
BE CH DE FR GB IT LI NL SE

(71) Applicant: IDEMITSU KOSAN COMPANY LIMITED
No. 1-1, 3-chome, Marunouchi Chiyoda-ku
Tokyo(JP)

(72) Inventor: Seiichiro, Yokoyama
c/o Idemitsu Kosan Co., Ltd. 1280, Kamiizumi
Sodegaura-machi Kimitsu-gun
Chiba-ken(JP)
Inventor: Hideaki, Kurata
c/o Idemitsu Kosan Co., Ltd. 1280, Kamiizumi
Sodegaura-machi Kimitsu-gun
Chiba-ken(JP)

(74) Representative: Türk, Gille, Hrabal
Bruckner Strasse 20
D-4000 Düsseldorf 13(DE)

(54) **Processes for producing color display material and color filter.**

(57) There are disclosed processes for producing a color display material or a color filter in which a hydrophobic dye or pigment film is formed on a transparent electrode, which comprises dissolving or dispersing a hydrophobic dye or pigment in an aqueous medium by a micelle forming agent composed of a ferrocene derivative and electrolyzing the resulting micelle solution or dispersion to form a thin film of said dye or pigment on the transparent electrode.

Fig. 1

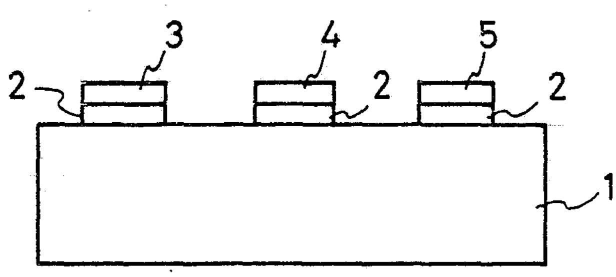


EP 0 355 585 A2

# PROCESSES FOR PRODUCING COLOR DISPLAY MATERIAL AND COLOR FILTER

## BACKGROUND OF THE INVENTION

### 1. Field of the Invention

This invention relates to processes for producing a color display material and a color filter, and more particularly to processes for efficiently producing color display material including a liquid crystal color display, aurora vision etc. and a color filter, by using a specific surfactant as well as forming a thin film of a hydrophobic dye or pigment at a desired portion on a transparent electrode by an electrochemical means.

### 2. Description of the Related Arts

Heretofore, for producing a color display material such as a liquid crystal color display, aurora vision, etc. and a color filter, there have been known (1) the printing method such as photoresist, screen, etc. (2) the vacuum deposition method, (3) the dyeing method in which a dye or pigment is dispersed in gelatin and the dispersion is made to a film, or 4) the dispersion method in which a dye or pigment is dissolved in a solvent with UV resist material, and the resulting dispersion is subjected to casting and then to UV radiation to form a patterned thin film.

However, the printing method of the above (1) has disadvantages in that operation is complicated, positioning with an electrode is difficult and the resulting color filter has low resistance of heat and light, and the vacuum deposition method of the above (2) is very inefficient in utilizing dye or pigment and also requires a large-scale device. Further, in the method (3), complicated operations are also required for producing color filter and the resulting color filter has low resistance of heat and light. On the other hand, in the method (4), though the color filter prepared has relatively high resistance of heat and light, more complicated operations are required.

## SUMMARY OF THE INVENTION

An object of the present invention is to provide a process which can form a color display material or a color filter at a desired position of an electrode with simple operation, precisely.

Also, another object of the present invention is to provide a process which can form a color display material or a color filter with high efficiency and in a thin film state.

The present inventors have studied intensively to accomplish the above objects. As the result, they have found that it is effective to apply the so-called Micellar Disruption Method (that is, the method in which a thin film is formed on an electrode by turning on electricity in a dispersed liquor or a micelle solution obtained by dispersing or dissolving a hydrophobic substance in an aqueous medium with surfactant comprising a ferrocene derivative, with conditions of forming a thin film of said hydrophobic substance on the electrode) in which the group of the present inventors' has previously developed (Japanese Patent Application Laid-Open No. 243298/1988, etc.), for forming a dye or pigment film on a transparent electrode. They have also found that an aimed color display material or a color filter in which positioning or leveling (to maintain the film thickness uniformly) is easy, with excellent electric conductivity, heat resistance, chemical resistance, light resistance, etc. can be obtained by the Micellar Disruption Method.

The present invention has been accomplished based on the above findings.

That is, the present invention is to provide a process for producing a color display material or a color filter which comprises, for producing a color display material or a color filter formed of a hydrophobic dye or pigment film on a transparent electrode, dissolving or dispersing a hydrophobic dye or pigment with a surfactant (hereinafter referred to as "micelle forming agent") composed of a ferrocene derivative in an aqueous medium, and then electrolyzing the resulting micelle solution or dispersion to form a thin film of the above dye or pigment on the transparent electrode.

## BRIEF DESCRIPTION OF THE DRAWINGS

Fig. 1 is a side view showing one example of a color display material prepared by the process of the present invention, wherein numeral 1 represents a glass substrate, 2 a transparent electrode, 3 a red thin film, 3 a green thin film and 4 a blue thin film.

Fig. 2 to 13 are explanation views showing procedures of multi-step film forming method, wherein numeral 11 represents an insulating subtrate (glass substrate), A, B, C and D each represents an electrode, 12 an extended electrode, 13 and 14 taken-out electrodes, R, G, B1 and B2 micelle solution, and E an etching solution.

Fig. 14 to 21 are each visible absorption spectrums (mark A) of the supernatant obtained and visible absroption spectrums (mark B) of thin films formed in Examples 1 to 8 and Comparative example 1. Fig. 22 is a figure of chromaticity of a color display material (color filter) constituted by the above examples.

## DESCRIPTION OF PREFERRED EMBODIMENTS

In the method of the present invention, a transparent electrode is formed with a desired shape on an insulating substrate such as a glass plate, etc. (particularly, a transparent substrate is preferred) and then a hydrophobic dye or pigment thin film is formed thereon by the so-called Micellar Disruption Method.

For forming the thin film of the aforesaid dye or pigment by the Micellar Disruption Method, the following procedures can be carried out. That is, into an aqueous medium with controlled electrical conductance, by adding a supporting electrolyte to water, if necessary, a micelle forming agent comprising a ferrocene derivative and a dye or pigment material (hydrophobic dye or pigment) are added so that micelles in which said dye or pigment materials are incorporated therein. When these micelles are subjected to electrolytic treatment, the micelles are attracted to an anode and the ferrocene derivative loses an electron $e^-$ on the anode (transparent electrode) ($Fe^{2+}$ in the ferrocene is oxidized to $Fe^{3+}$). Accompanying this, the micelle is disrupted and the dye or pigment material inside thereof is deposited on the anode to form a thin film. On the other hand, the oxidized ferrocene derivative is drawn to a cathode to accept an electron $e^-$ to form again a micelle. In the course of repeating disruption and formation of the micelle, particles of the dye or pigment material are deposited on the transparent electrode to become a thin film state material, whereby a desired dye or pigment thin film can be formed.

The micelle forming agent to be used in the present invention comprises a ferrocene derivative. Here, the ferrocene derivatives can include various ones, but for example, there may be mentioned, as representative ones, the ferrocene derivative represented by the following general formula:

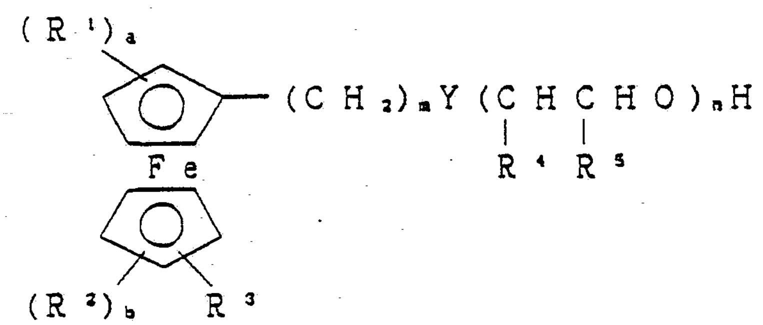

(I)

wherein $R^1$ and $R^2$ each represent an alkyl group having 6 or less carbon atoms, an alkoxy group having 6 or less carbon atoms, an amino group, a dimethylamino group, a hydroxy group, an acetylamino group, a carboxyl group, a methoxycarbonyl group, an acetoxy group, an aldehyde group or a halogen atom; $R^3$ represents a hydrogen atom or a straight or branched alkyl group having 4 to 18 carbon atoms, or an alkenyl group; and $R^4$ and $R^5$ each represent a hydrogen atom or a methyl group; Y represents an oxygen atom, an oxycarbonyl group or an acyloxy group (carboxyl group); a is an integer of 0 to 4, b is an integer of 0 to 4, m is an integer of 1 to 18 and n is a real number of 2.0 to 70.0. Here, each symbol in the general formula (I) is as shown above. That is, as shown in International Patent Applications Laid-Open No. WO 88/07538 and No. WO 89/01939, Japanese Patent Application Laid-Open No. 233797/1988. etc., $R^1$ and $R^2$ each represent an alkyl group having 6 or less carbon atoms (a methyl group ($CH_3$), an ethyl group ($C_2H_5$), etc.), an alkoxy group having 6 or less carbon atoms (a methoxy group ($OCH_3$). an ethoxy group ($OC_2H_5$). etc.), an amino group ($NH_2$), a dimethylamino group ($N(CH_3)_2$), a hydroxy group (OH), an acetylamino group ($NHCOCH_3$). a carboxyl group (COOH), a methoxycarbonyl group ($COOCH_3$), an acetoxy group ($OCOCH_3$), an aldehyde group (CHO) or a halogen atom (chlorine, bromine, fluorine, iodine, etc.). $R^1$ and $R^2$

may be the same or different, and in the case where a plural number of $R^1$ and $R^2$ are present at the 5-membered ring of the ferrocene, the plural number of substituents may be the same as or different from each other. Also, $R^3$ represents a hydrogen atom or a straight or branched alkyl group having 4 to 18 carbon atoms, or an alkenyl group.

Further, Y represents an oxygen atom (-O-), an acyloxy group $(-\underset{\underset{O}{\|}}{C}-O-)$ or an oxycarbonyl group $(-O-\underset{\underset{O}{\|}}{C}-)$, and $R^4$ and $R^5$ each represent a hydrogen atom or a methyl group ($CH_3$). Accordingly,

$$-Y-(\underset{\underset{R^4}{|}}{CH}\underset{\underset{R^5}{|}}{CH}O)_nH \text{ is } -O(CH_2CH_2O)_nH,$$

$$-O(CH_2\underset{\underset{CH_3}{|}}{CH}O)_nH,\ -O(\underset{\underset{CH_3}{|}}{CH}CH_2O)_nH,\ -\underset{\underset{O}{\|}}{C}-O(CH_2CH_2O)_nH,\ -\underset{\underset{O}{\|}}{C}-O(CH_2\underset{\underset{CH_3}{|}}{CH}O)_nH$$

$$\text{or } -\underset{\underset{O}{\|}}{C}-O(\underset{\underset{CH_3}{|}}{CH}CH_2O)_nH.$$

Also, m represents an integer of 1 to 18. Accordingly, an alkylene group having 1 to 18 carbon atoms such as an ethylene group, a propylene group, etc. is interposed between the carbon atom in the ring and the above oxygen atom or an oxycarbonyl group. Further, n represents a recurring number of an oxyalkylene group such as an integer of 2.0 to 70.0 but also a real number including these, and represents an average value of recurring numbers of the oxyalkylene group, etc.

The ferrocene derivatives to be used in the process of the present invention may include various ones, in addition to those represented by the above formula (I), and there may be mentioned ferrocene derivatives, including an ammonium type and pyridine type (International Patent Application Laid-Open No. WO88/07538 and Japanese Patent Application No. 233797/1988, No. 233798/1988. No. 248600/1988, No. 248601/1988, No, 45370/1989. No, 54956/1989, No. 70680/1989, No. 70681/1989, No. 76498/1989 and No. 76499/1989).

These ferrocene derivatives can dissolve or disperse the hydrophobic substances in an aqueous medium with high efficiency.

In the process of the present invention, a micelle forming agent comprising the above ferrocene derivative, a supporting agent and a dye or pigment material are first placed in an aqueous medium and thoroughly dispersed by the use of supersonic waves, a homogenizer, or a stirrer, for forming a micelle. Thereafter, if necessary, excessive dye or pigment material is removed, and the micelle solution (or dispersion) thus obtained is subjected to electrolytic treatment using a transparent electrode while allowing it to stand or somewhat stirring. During the electrolytic treatment, the above dye or pigment material may be supplementarily added to the micelle solution (dispersion); or there may be provided a recycle circuit in which the micelle solution in the vicinity of the anode is withdrawn out of the system, the dye or pigment material is added to the withdrawn micelle solution and thoroughly stirred, and then the resulting solution is returned to the vicinity of the cathode. The concentration of the micelle forming agent at this time may be a threshold micelle concentration or higher, specifically about 0.1 mM or higher. On the other hand, the concentration of the dye or pigment material may be a saturated concentration or higher. Also, the electrolytic conditions are determined appropriately depending on various circumstances. Usually, the liquid temperature is 0 to 70 °C and preferably 5 to 40 °C, the voltage is between oxydation-reduction potential of the ferrocene derivative as micelle forming agent and potential capable of generating hydrogen, specifically is 0.03 to 1.00 V and preferably 0.15 to 0.7 V, the current density is not more than 10 mA/cm$^2$ and preferably 50 to 300 $\mu$A/cm$^2$.

Upon performing this electrolytic treatment, the reaction based on the principle of the Micellar Disruption Method proceeds. Concentrating on the behavior of Fe ion in the ferrocene derivative, $Fe^{2+}$ of the ferrocene is converted into $Fe^{3+}$ on an anode, leading to the breakdown of the micelle, and particles of a dye or pigment material are deposited on the anode (transparent electrode). On the other hand, $Fe^{3+}$ oxidized on the anode is reduced to $Fe^{2+}$ on the cathode, recovering the original micelle, and therefore, a

film forming operation can be carried out repeatedly using the same solution.

Electrolytic treatment as described above forms a desired thin film of the dye or pigment material on the anode (transpatent electrode).

The supporting salt (supporting electrolyte) to be used in the process of the present invention as described above is added, if necessary, in order to control the electrical conductance of the aqueous medium. The amount of the supporting salt added may be the range that does not prevent the deposition of the dye or pigment material solubilized or dispersed therein, but usually, a concentration of about 0 to 300 times, preferably about 50 to 200 times that of the above micelle forming agent.

Electrolysis may be carried out without using this supporting salt, and in this case, a high purity thin film containing no supporting salt can be prepared. Also, in the case of using the supporting salt, the kinds of the supporting salt are not particularly limited so long as it can control the electrical conductance of the aqueous medium without preventing formation of the micelle or deposition of the above dye or pigment material on the electrode.

More specifically, sulfuric acid salts (salts of lithium, potassium, sodium, rubidium or aluminum), acetic acid salts (salts of lithium, potassium, sodium, rubidium, berylliium, magnesium, calcium, strontiun, barium or aluminum), salts of halides (salts of lithium, potassium, sodium, rubidium, calcium, magnesium or aluminum), salts of water-soluble oxides (salts of lithium, potassium, sodium, rubidium, calcium, magnesium or aluminum), which are generally widely used as supporting salts, are suitable.

Also, in the present invention, it is preferred to add, if necessary, a film structure reinforcing agent to the above micelle solution. By adding this reinforcing agent, bonding of partilces constituting the film formed by the Micellar Disruption Method can be made firm so that the thin film can be made insoluble and stable even when it is dipped again in the micelle solution. Accordingly, as the film structure reinforcing agent, various ones may be used so long as they can make the thin film formed firm and stable. More specifically, the following three types materials may be mentioned.

As the first type ones, those which have generally been used as adhesives can be mentioned, for example, an epoxy resin series, a polyvinylacetate series, a poly(methyl methacrylate) series, etc. These adhesives may be ones which have adhesive force as they are, or may be ones which change to have adhesive force by a radical initiator, an UV ray, etc. As the second type, those which have generally been used as an electrolytic polymer film substrate may be mentioned, for example, pyrrol, aniline, thiophene, viologen, etc. These materials electrolytically polymerize in the thin film to improve film strength. As the third type, those which have generally been used as protective film agents may be mentioned, for example, polyvinyl alcohol, polyacrylic acid, polymethacrylic acid, polyethylene glycol, polyvinyl butyral, etc.

The amount of the above film structure reinforcing agent may be varied depending on the kinds thereof, but preferably it is added so as to become a concentration of 10 $\mu$M to 100 mM to the micelle solution.

Also, in the present invention, if the thus formed thin film is subjected to heat or baking treatment, a more stable thin film can be obtained. This is because, by the baking treatment, it can be considered that the aforesaid particles cause sintering with each other, whereby a film which is denser, having a strong bonding force of the particles with each other and stability, can be developed. This baking treatment is carried out in, for example, an electric furnace but, the methods to heat the thin film are not particularly limited.

The heating temperature and the heating time in the baking treatment may differ depending on the kinds of the hydrophobic substance and cannot be defined singly, but it may be in the range wherein the film formed by the Micellar Disruption Method is porous and its bonding force becomes high.

The heating temperature is preferably 80 to 500 °C, more preferably 100 to 350 °C, and the heating time is preferably in the range of 5 minutes to 10 hours, more preferably 30 minutes to 2 hours.

The material of the transparent electrode to be used in the process of the present invention is sufficient if it is a metal more noble than the oxidation potential (against +0.15 to 0.30 V saturated calomel electrode) of the ferrocene derivatives or an electrically conductive substance. More specifically, ITO (mixed oxide of indium oxide and tin oxide), tin oxide and electrically conductive polymer film, etc. may be mentioned.

In the process of the present invention, as the usable dye or pigment material, there may be mentioned the dye or pigment materials exhibiting the three primary colors of light, i.e. including red, green and blue hydrophobic dye or pigments and those exhibiting various colors. As the red dye or pigments, there may be mentioned a perylene type pigment, a lake pigment, an azo type pigment, a quinacridone type pigment, an anthraquinone type pigment, an anthracene type pigment, etc. For example, there may be mentioned a perylene pigment, a lake pigment (Ca, Ba, Sr and Mn), quinacridone, naphthol AS, a shikomin pigment, anthraquinone (Sudan I, II, III, R), disazo, benzopyrane, a cadmium sulfide type pigment, a Fe (III) oxide type pigment, etc. and the perylene pigment and the lake pigment are preferred. Also, as the green dye or pigments, there may be mentioned a halogen-poly-substituted phthalocyanine type pigment, a halogen-poly-substituted copper phthalocyanine type pigment, a triphenylmethane type basic dye or pigment, etc. For example, there may also be mentioned a chloro-poly-substituted phthalocyanine, its copper complex, a barium triphenylmethane dye or pigment, etc. As the blue dye or pigments, there may be mentioned a copper phthalocyanine type pigment, an indanthrone type pigment, an indophenol type pigment, a cyanine type pigment, etc. For example, there may be mentioned phthalocyanine metal complexes such as chlorocopperphthalocyanine, chloroaluminumphthalocyanine, phthalocyanine vanadate, magnesium phthalocyanine, zinc phthalocyanine, iron phthalocyanine, cobalt phthalocyanine, etc.; phthalocyanine, merocyanine, indophenole blue, etc.

According to the method of the present invention, on transparent electrodes which have a desired shape and are provided with necessary numbers at predetermined positions of an insulating substrate such as a glass plate or a polymer plate including polyethylene terephthalate, etc., particularly, at a transparent insulating substrate, a hydrophobic dye or pigment thin film can be formed with an optional film thickness whereby a color display material or a color filter can be constituted. In order to form the hydrophobic dye or pigment thin film of the three primary colors, it may be carried out by adding any one of hydrophobic dye or pigments of red, green and blue into an aqueous medium and conducting the aforesaid Micellar Disruption Method to form a thin film of a desired hue, and then the Micellar Disruption Method is repeatedly carried out by changing the kind of the hydrophobic dye or pigment. By carrying out the operations, a hydrophobic dye or pigment thin film of the three primary colors (red, green and blue) hydrophobic dye or pigment or at least one color in addition to these three primary colors can be formed on each transparent electrode as shown in Fig. 1. In the present invention, a color display material or a color filter can be produced by simultaneously existing hydrophobic dye or pigments of red, green or blue in an aqueous medium, and applying the Micellar Disruption Method thereto.

In the process of the present invention, it is preferred that the surface of the above insulating substrate or the electrodes is previously subjected to a hydrophobic treatment for the Micellar Disruption Method. This hydrophobic treatment can be carried out by various methods, but it is particularly preferred to carry out the treatment using a coupling agent. The various kinds of coupling agents to be used at this time may be mentioned, for example, including silane coupling agents, titanium coupling agents, aluminum coupling agents, zircoaluminate coupling agents, zirconium coupling agents, acrylate type coupling agents, methacrylate type coupling agents, glycidyl type coupling agents, phosphate type coupling agents, ammonium halide type coupling agents, etc. Here, the silane coupling agents may be classified into a chlorine-containing silane, alkoxy silane, amino silane, acetoxy silane, etc. Also, the acrylate type coupling agents, methacrylate type coupling agents, glycidyl type coupling agents, phosphate type coupling agents, ammonium halide type coupling agents, etc. are called as specific monomers or functional monomers. Specific examples thereof are enumerated in "Coupling Agent Optimum Utilization Technique" (February 25, 1989, published by Kagaku Gijutsu Sogo Kenkyusho) and all of these materials can be used in the process of the present invention.

As the hydrophobic treatment, more specifically, it can be carried out by dissolving the above coupling agent in a solvent such as an aromatic hydrocarbon of benzene, toluene, etc. or methanol, ethanol, etc. with a ratio of about 1 to 30% by weight and then dipping the electrodes to be treated and the substrate which is subjected to patterning of said electrodes in the solution to effect circulation for 1 to 12 hours, followed by drying.

Also, as the hydrophobic treatment, it may only be carried out by coating the above coupling agent directly on the electrode and substrate and drying them. Here, for drying, the treatment proceeds more rapidly when heating, particularly heating at 80°C to 200°C, is carried out. The coating amount at this time is not particularly limited, but generally it is preferred to use the coupling agent with about 0.01 mole/25 x 75 mm or more.

Such a hydrophobic treatment may be carried out so as to form the contact angle of the electrode or the surface of the substrate of 10° or more, particularly preferably 40° or more.

The process of the present invention can form, as described above, a desired hydrophobic dye or pigment thin film on each transparent electrode by repeatedly carrying out the Micellar Disruption Method. As one of the preferred embodiments of the present invention, there may be mentioned a multi-stage film forming method as shown below.

This multi-stage film forming method is a method which comprises, when forming, on a substrate, a plural number of thin films of a hydrophobic substance by the Micellar Disruption Method on the surface of a plural number of a pair of electrodes which are subjected to patterning to a shape having a plural number of a pair of taken-out portions which are different in taken-out portion with each pair, further providing an extended electrode composed of a base metal at the taken-out portions of a pair of electrodes; connecting the extended electrodes at the taken-out portions of the above pair of electrodes and the taken-out

electrode to form a thin film of a hydrophobic substance on the above electrode by the Micellar Disruption Method; selectively removing, by etching, the extended electrodes of the pair of the electrodes forming the above thin film so as to not causing shortcircuiting when the taken-out electrodes with the other pair of the electrodes; then by connecting a taken-out portion of the other pair of electrodes with extended electrode to form a thin film of the other hydrophobic substance by the Micellar Disruption Method; and repeating the above operation the number of times necessary to form a plural number of thin films of the hydrophobic substance on a plural number of a pair of electrodes.

The above multi-stage film forming method is to provide thin films of a plural number of hydrophobic substance on the plural number of pair of electrodes by using the above Micellar Disruption Method easily and efficiently. Hereinafter it can be explained in more detail by referring to the drawings.

Fig. 2 shows a state in which electrodes are subjected to patterning on an insulating substrate 11, and four groups of electrodes A to D are so patterned as to have different taken-out positions. Patterning of the electrodes are generally carried out by etching. However, the patterning may be carried out by the masking deposition in which masking is made at the time of forming film on the electrodes, or the photoresist method, etc. While in the figure, the electrodes are provided in stripes, but they may include those of dots, bias wirings, curves, triangles, circles, etc.

When explaining the order of film forming,

(1) firstly, as shown in Fig. 3, at a taken-out portion of a pair of electrodes 8 (short line in the figure), an extended electrode 12 comprising a base metal such as Cr, Al, etc. are provided by masking deposition, the etching method, the photoresist method, etc. This extended electrode should be subjected to patterning so as to easily contact with taken-out electrodes.

(2) Next, as shown in Fig. 4, so as to turn on electricity only through electrode B, a taken-out electrode 13 comprising platinum, conductive rubber, silver paste, etc. is connected to the extended electrode. This substrate is dipped only on the left side of the electrodes B in a micelle electrolyte R dispersing or dissolving a hydrophobic substance R such as dye or pigment, etc., and subjected to electrolytic treatment by the Micellar Disruption Method to form a thin film only at the bold line portions of the electrodes B in the figure.

(3) Next, by reversing the substrate position, as shown in Fig. 5, the extended electrode at the right portion is dipped in the etching solution E to effect etching and remove the extended electrode comprising a base metal whereby it becomes as shown in Fig. 6.

In the case that the extended electrode is Cr, as the etching solution, a solution composed of:

| | |
|---|---|
| $HClO_4$ | 5 cc |
| $Ce(NO_3)_4$ | 17 g |
| Water | 100 cc |

or a solution prepared by, if necessary, adding HCl, $HNO_3$, $FeCl_3$, etc. thereto may be preferable.

(4) Next, in the same manner as in (2) as shown in Fig. 7, the right side of the electrodes D are dipped in the micelle electrolyte G and subjected to electrolytic treatment by the Micellar Disruption Method to form a thin film only at the bold line portions of the electrodes D in the figure.

(5) Next, in the same manner as in (3) as shown in Fig. 8, when the left side of the extended electrode is removed by etching, the substrate having taken-out positions of ITO at both sides of each pair as shown in Fig. 9.

(6) Next, as shown in Fig. 10, a taken-out electrode 14 is connected to one pair of electrodes C (in the figure, taken-out portion is present at left side), the electrodes C are dipped in the micelle electrolyte B1 and subjected to electrolytic treatment by the Micellar Disruption Method to form a thin film only at the bold line portions of the electrodes C in the figure.

As the taken-out electrode, those in which the taken-out portion of the electrode is held down with an electrode such as aluminum, platinum, etc. and being short-circuited with silver paste, etc. are preferred.

(7) Next as shown in Fig. 12 the taken-out electrode is connected to the other pair of electrodes A, then dipping the electrodes A in the micelle electrolyte B2, and the electrolytic treatment is carried out in the same manner as in (6), so that a thin film can be formed at the bold line portions of the electrodes A as shown in Fig. 13.

By repeating the above operations depending on necessity, a plural number of thin films composed of a hydrophobic substance can be realized with continuous film formation. Accordingly, this multi-stage film forming method is an extremely effective film forming method for preparation of a color filter which is

required to form dye or pigment thin films of three or more colors on the electrodes.

As described above, according to the process of the present invention, a color display material or a color filter can be formed only on electrodes which had been subjected to patterning with high efficiency. And also, since the formed dye or pigment thin film is extremely thin and porous, there are advantages that lowering in the potential of the electrodes due to resistance is a little and they can be used directly as a filter of a liquid crystal. And yet, it is not necessary to effect positioning with electrodes. Further, the dye or pigment thin film thus formed is excellent in electrical conductivity, heat resistance, chemical resistance, light resistance, etc. as compared with those formed by the conventional method. Moreover, in this dye or pigment thin film its film thickness can be optionally controlled by changing an amount of electricity passed therethrough, whereby leveling is easy.

Accordingly, the color display material or the color filter prepared by the process of the present invention can be utilized, for example, for various display devices such as a liquid crystal display device, an electrochromic display device, a latitude display device, a plasma display panel, a spectroscopic device, a solid photographing device, a dimmer, etc. or a filter. More specifically, it can be effectively utilized in the field of personal computers of lap top type, word processors, liquid crystal color TVs, liquid crystal color filters, color tone glass, aurora visions etc.

Next the present invention will be explained in more detail by referring to Examples and Comparative examples.

Examples 1 to 12

To 100 ml of water was added 190 mg of the compound (FPEG) represented by the formula:

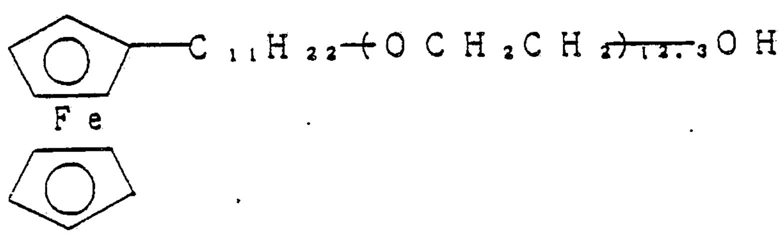

as a nonionic micelle forming agent, and the mixture was stirred to prepare a uniform micelle solution. To 50 mg of the micelle solution was added 0.2 g of a predetermined hydrophobic dye or pigment and the mixture was stirred for 10 minutes with ultrasonic wave, and then stirred for 3 days by using a stirrer. This soluble micelle solution was allowed to settle for one day and the supernatant was collected.

Visible ray absorption spectrum of the supernatants are shown in Fig. 14 (Example 1), Fig. 15 (Example 2), Fig. 16 (Example 3), Fig. 17 (Example 4), Fig. 18 (Example 5), Fig. 19 (Example 6), Fig. 20 (Example 7) and Fig. 21 (Example 8) as mark A, respectively.

Next, 0.104 g of LiBr was added to the supernatant to obtain 0.2 M LiBr/2 mM FPEG/dye or pigment solution. Further, by using this solution as an electrolyte, an ITO transparent electrode as an anode, platinum as a cathode and a saturated calomel electrode as a reference electrode, controlled potential electrolysis was carried out at 25° C with an applied voltage of 0.5 V and a predetermined electric current.

As the result, a thin film of the used hydrophobic dye or pigment can be obtained on an ITO transparent electrode. The visible ray absorption spectrum of the thin films on the transparent electrode are shown in Fig. 14 (Example 1), Fig. 15 (Example 2), Fig. 16 (Example 3), Fig. 17 (Example 4), Fig. 18 (Example 5), Fig. 19 (Example 6), Fig. 20 (Example 7) and Fig. 21 (Example 8) as mark B, respectively.

Since mark A and mark B are accorded with each other in each of the figures, it can be found that the thin film on the ITO transparent electrodes comprises the hydrophobic dye or pigment which is used as a starting material.

Further, the film thickness of the thin film was measured by ultraviolet ray absorption spectrum.

According to the above operations, a color display material and a color filter were constituted, and their chromaticities are shown in Fig. 22 as a chromaticity diagram. From this chromaticity diagram, it can be understood that the thin film on the ITO transparent electrode can be used as the three primary colors.

Further, the membrane resistance in a 0.1 M LiBr aqueous solution (opposite electrode: platinum, electrode area: 1.00 $cm^2$, electrode distance: 1.00 cm) was measured by the alternating current impedance method (1 kHz, 1.0 VAC). Also, the thin films prepared were divided into three groups, and one of them was

placed in an electric furnace and heated at a predetermined temperature for 2 hours. After the heat treatment, visible ray absorption spectrum thereof was measured and the heat resistance temperature was determined as the temperature at which the changed area of spectrum curve became 10% or more. Further, another one of the thin films was dipped in N-methylpyrrolidone (NMP), dimethylacetamide (DMAc), toluene and acetone, and allowed to stand for a whole day and night and then appearances of dissolution and color change were observed. Moreover, the remaining one of the thin films was irradiated to 500 W of a Hg lamp for 10 hours, and the change in appearance was observed to evaluate light resistance of the thin film.

These results and operation conditions are shown in Table 1 to Table 3.

Further, the film thicknesses of the thin films prepared in the above were measured by optionally selecting 100 points and their averages and distributions were calculated. Moreover, from these results, standard deviations of the distribution was measured and it was made the standard of leveling. Furthermore, gap lengths of said thin films from a boundary line of the ITO transparent electrode and the thin film were measured by optionally selecting 100 points and their averages were calculated to make the standard of positioning. The results are shown in Table 3.

As clearly seen from the results of Table 1 and Table 3, when the dye or pigment thin film was formed on the ITO according to the process of the present invention, it can be understood that no increase in the resistance value due to membrane resistance can be observed and if it was directly attached to an electrode material such as a liquid crystal, etc., no hindrance to its workability occured, whereby it was extremely convenient. Also, as clearly seen from Table 2, it can be understood that the thin film formed was excellent in heat resistance, chemical resistance and light resistance.

<u>Reference example 1</u>

Regarding only ITO on which no dye or pigment thin film was formed, its membrane resistance was measured in the same manner as in the above examples. The results are shown in Table 1 and Table 3.

<u>Comparative example 1</u>

By using phthalocyanine ($Pc-H_2$) as the dye or pigment, it was formed on the ITO as the dye or pigment thin film by the deposition method. The results are shown in Table 1 and Table 3.

Table 1

| No. | Hue | Name of dye (pigment) | Maker of dye | Particle Size (μm) | Potential (V) | Current density (μA) | Applied amount of electric current (C) |
|---|---|---|---|---|---|---|---|
| Example 1 | red | Paliogen Red K3580 | BASF | 0.07 | 0.5 | 8.0 | 0.02 |
| Example 2 | red | Lithol Scarlet K4460 | BASF | 0.12 | 0.5 | 12.3 | 0.03 |
| Example 3 | red | Lithol Scarlet K3700 | BASF | 0.08 | 0.5 | 7.0 | 0.02 |
| Example 4 | green | Heliogen Green K9360(8G) | BASF | 0.15 | 0.5 | 9.1 | 0.03 |
| Example 5 | green | Heliogen Green K8730(6G) | BASF | 0.12 | 0.5 | 13.5 | 0.04 |
| Example 6 | blue | Pc-Cu (α)*1 | Dainichi Seika | 0.18 | 0.5 | 9.6 | 0.024 |
| Example 7 | blue | Pc-Cu (β)*1 | Dainichi Seika | 0.16 | 0.5 | 4.2 | 0.013 |
| Example 8 | red | Pc-$H_2$*2 | Tokyo Kasei | 0.22 | 0.5 | 15.8 | 0.04 |
| Example 9 | red | Paliogen Red K3911 HD | BASF | 0.08 | 0.5 | 7.5 | 0.02 |
| Example 10 | red | Chromophthal Red A3B | Ciba Geigy | 0.12 | 0.5 | 10.0 | 0.03 |
| Example 11 | blue | Indophenol Blue | Wako Junyaku | 0.13 | 0.5 | 15.0 | 0.04 |
| Example 12 | red | Chromophthal Red A3B | Hoechst | 0.16 | 0.5 | 12.0 | 0.03 |
| Reference example 1 | - | Only ITO | - | - | - | - | - |
| Comparative example 1 | blue | Pc-$H_2$*2(deposition method) | Tokyo Kasei | 0.02 | - | - | - |

*1: Phthalocyanine copper complex,
*2: Phthalocyanine

Table 2

| No. | Heat resistant temperature | Chemical resistance | | | | Light resistance |
|---|---|---|---|---|---|---|
| | | Acetone | Toluene | DMAc | NMP | |
| Example 1 | 350 | ○ | ○ | ○ | ○ | ○ |
| Example 2 | 200 | ○ | ○ | ○ | ○ | ○ |
| Example 3 | 200 | ○ | ○ | △ | △ | △ |
| Example 4 | 350 | ○ | ○ | ○ | ○ | ○ |
| Example 5 | 350 | ○ | ○ | ○ | ○ | ○ |
| Example 6 | 350 | ○ | ○ | ○ | ○ | ○ |
| Example 7 | 350 | ○ | ○ | ○ | ○ | ○ |
| Example 8 | 350 | ○ | ○ | ○ | ○ | ○ |
| Example 9 | 300 | ○ | ○ | ○ | ○ | ○ |
| Example 10 | 350 | ○ | ○ | ○ | ○ | ○ |
| Example 11 | 300 | ○ | ○ | ○ | ○ | ○ |
| Example 12 | 350 | ○ | ○ | ○ | ○ | ○ |

Table 3

| | | Film thickness | | |
|---|---|---|---|---|
| No. | Film resistance (Ω°cm) | Average (µm) | Deviation (%) | Positioning (µm) |
| Example 1 | 62.7 | 0.3 | ± 5.0 | ± 0.10 |
| Example 2 | 228 | 0.2 | ± 11.9 | ± 0.05 |
| Example 3 | 130.6 | 0.3 | ± 6.7 | ± 0.07 |
| Example 4 | 98.3 | 0.7 | ± 8.9 | ± 0.06 |
| Example 5 | 78.6 | 0.9 | ± 7.9 | ± 0.05 |
| Example 6 | 42.5 | 0.8 | ± 9.4 | ± 0.08 |
| Example 7 | 96.3 | 0.3 | ± 8.2 | ± 0.09 |
| Example 8 | 138.2 | 0.2 | ± 5.2 | ± 0.12 |
| Example 9 | 36.2 | 0.2 | ± 7.6 | ± 0.01 |
| Example 10 | 37.6 | 0.2 | ± 4.8 | ± 0.01 |
| Example 11 | 53.2 | 0.3 | ± 3.9 | ± 0.02 |
| Example 12 | 21.1 | 0.2 | ± 9.2 | ± 0.01 |
| Reference example 1 | 30.6 | - | - | - |
| Comparative example 1 | 972.6 | 0.2 | - | - |

Example 13

To 200 cc of water was added 380 mg of FPEG as a nonionic micelle forming agent, and the mixture was stirred to form a uniform micelle solution. The micelle solution obtained was divided to four portions of 30 cc each, and to the first was added 0.2 g of a perylene pigment (HF4B: trade name, produced by Hoechst AG), to the second was added 0.2 g of Heliogen Green pigment (L9361: trade name, produced by BASF Co.), and to the third was added 0.2 g of Heliogen Blue pigment (K7080: trade name, produced by BASF Co.), and to the remaining one was added 0.2 g of Heliogen Blue pigment (K6902: trade name, produced by BASF Co.), and each mixture was dispersed and dissolved to prepare four groups of three colors of pigment solutions of R (red), G (green) and B (blue), respectively. These solutions were each subjected to ultrasonic wave dispersion for 10 minutes, and then stirred for 3 days with a stirrer. To each of the resulting dispersed micelle solution was added lithium bromide as a supporting salt so that the concentration became 0.1 mole/liter. These solutions were made as the electrolyte R (that added the perylene pigment), the electrolyte G (that added Heliogen Green pigment), the electrolyte B1 (that added Heliogen Blue pigment K7080) and the electrolyte B2 (that added Heliogen Blue pigment K6902), respectively.

Next, to 100 ml of water were added 5 cc of $HClO_4$ and 17 g of $Ce(NO_3)_4$ and the mixture was stirred to prepare an etching solution.

Here, an ITO electrode-provided glass substrate was used as a substrate. The ITO electrode on which a thin film of the pigment was formed was subjected to patterning on the glass substrate (insulating substrate) 11 in paralell by shifting the position of the taken-out portions. In this case, since pigments which are to form a thin film are of four kinds, the four groups the electrodes, in which a pair of long ITO electrodes and a pair of ITO electrodes having Cr extended electrodes, are subjected to patterning so as to have different taken-out positions.

When film forming was carried out on the ITO electrodes and the Cr extended electrodes by the Micellar Disruption Method, a silver paste was used as the taken-out electrode, and the electrolitic treatment was carried out by connecting with the ITO electrode or the extended electrode.

In the following, operations of the Micellar Disruption Method and etching are explained.

(1) As shown in Fig. 4, into the micelle electrolyte solution R was dipped the ITO provided glass substrate which had been subjected to patterning with the left side down, and a silver paste was coated to an extended electrode comprising Cr taken-out wire at the right side and dried to make the taken-out electrode. By using a silver plate as an opposite electrode, and a saturated calomel electrode as a reference electrode, controlled potential electrolysis was carried out at the electric potential of 0.7 V for 30 minutes to form a thin film of R of the first group on the electrode.
Thereafter, this thin film was washed with an ion- exchanged water, and after drying, it was baked in an oven at 140 °C.

(2) Next, as shown in Fig. 5, the glass substrate which had been provided with ITO subjected to patterning was dipped with its right side down in an etching solution. After one hour, when no remaining Cr extended electrode was confirmed, etching treatment was stopped and washing was carried out. Thus, the substrate in which the R thin film was provided thereto as shown in Fig. 6 can be obtained.

(3) Then, the substrate obtained in (2) above was dipped in the micelle electrolyte G with the right side down as shown in Fig 7, and a silver paste was coated to an extended electrode comprising Cr taken-out wire at the left side and dried to make the taken-out electrode whereby the G film of the second group was formed. Film forming, washing and baking operations were carried out in completely the same manner as in the operation (1) above.

(4) Subsequently, as shown in Fig. 8, the Cr extended electrode at the left side of the glass substrate which had been provided with ITO subjected to patterning was subjected to removal by etching, washing and drying in the completely the same manner as in the operation (2) above to obtain the RG film-provided substrate as shown in Fig. 9.

(5) Subsequently, the right side of the RG film-provided substrate was dipped in the micelle electrolyte B1 as shown in Fig. 10, and a silver paste was coated so as to skewer the ITO electrode, and after drying, to make a taken-out electrode, whereby the B1 film of the third group was formed. Film forming, washing and baking operations were carried out in the same manner as in the operation (1). Thus, the RGB1 film as shown in Fig. 11 can be obtained.

6) Subsequently, the left side of the RGB1 thin film-proveded substrate, as shown in Fig. 12, was

dipped in the micelle electrolyte B2 to form the B2 film of the fourth group following the same manner as in the operation (5). Thus, the RGB1B2 thin film (four color striped thin film) as shown in Fig. 12 can be obtained.

## Example 14

In anhydrous toluene was dissolved a silane coupling agent ($C_6H_{13}Si(OCH_3)_3$, produced by Sin-etsu Chemical Co., Ltd., LS-3130, trade name) to make a concentration of 10%. ITO electrodes were dipped into this solution and circulated for 6 hours, followed by drying to apply the hydrophobic treatment. Visible light transmission (620 nm) of the electrode before the hydrophobic treatment was measured and the result is shown in Table 4.

Next, into 100 ml of water was added 0.19 g of FPEG as a micelle forming agent, and to 25 ml of the resulting micelle solution was added 0.2 g of copper phthalocyanine to disperse and dissolve therein. The solution was stirred by ultrasonic wave for 10 minutes, followed by stirring for 3 days with a stirrer. Into the resulting dispersed micelle solution was added lithium bromide as a supporting salt so that the concentration became 0.1 M, and it was stirred to obtain an electrolyte.

By using this electrolyte, as well as by using the ITO transparent glass electrode applied with the above hydrophobic treatment as the anode, a platinum as the cathode and a saturated calomel electrode as the reference electrode, controlled potential electrolysis was carried out at 25° C, at the applied voltage of 0.5 V and an electric current density of 11.5 $\mu A/cm^2$ for 30 minutes. The amount of electric current that passed therethrough at this time was 0.02 coulomb (C).

The thus prepared ITO transparent glass electrode on which the thin film was formed was taken out from the electrolyte, followed by drying, and then visible light transmission (620 nm) was each measured, with respect that washing was carried out by dipping in distilled water and that no washing was carried out. The results are shown in Table 4.

## Example 15

The hydrophobic treatment was carried out in the same manner as in Example 14 except that a glass plate was used in place of electrodes.

Each visible light transmission (620 nm) of the glass plate before dipping in the electrolyte used in Example 14 and after dipping in the electrolyte for 30 minutes were measured. Further, after washing the dipped glass plate in the same manner as in Example 14, its visible light transmission (620 nm) was measured. The results are shown in Table 4.

## Example 16

In anhydrous toluene was dissolved a silane coupling agent ($C_3H_6ClSi(OCH_3)_3$, produced by Sin-etsu Chemical Co., Ltd., LS-1260, trade name) to make a concentration of 10%. ITO electrodes were dipped into this solution and circulated for 6 hours, followed by drying to apply the hydrophobic treatment. Visible light transmission (620 nm) of the electrode before the hydrophobic treatment was measured and the result is shown in Table 4.

Next, into 100 ml of water was added 190 mg of the compound (FEST9) represented by the formula:

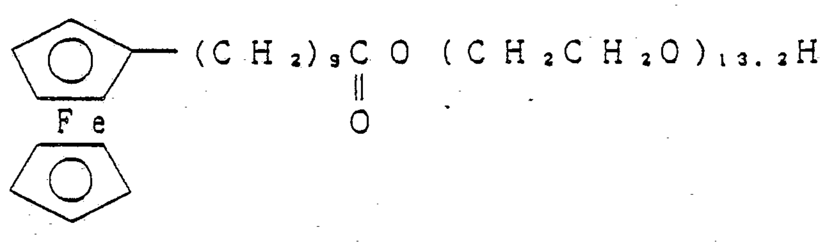

as a micelle forming agent, and to 25 ml of the resulting micelle solution was added 0.1 g of monoazonaphthol type pigment (produced by Hoechst AG, HF4B, trade name) to disperse and dissolve therein.

Subsequently, the solution was stirred by ultrasonic waves for 10 minutes, followed by stirring for 3 days with a stirrer. Into the resulting dispersed micelle solution was added lithium bromide as a supporting salt so that the concentration became 0.1 M, and it was stirred to obtain an electrolyte.

By using this electrolyte as well as by using the ITO transparent glass electrode applied with the above hydrophobic treatment as the anode, a platinum as the cathode and a saturated calomel electrode as the reference electrode, controlled potential electrolysis was carried out at 25° C, at the applied voltage of 0.5 V, and an electric current density of 5.6 $\mu A/cm^2$ for 30 minutes. The amount of electric current that passed therethrough at this time was 0.01 C.

The thus prepared ITO transparent glass electrode on which the thin film was formed was taken out from the electrolyte, followed by drying, and then visible light transmission (620 nm) was each measured, with respect that washing was carried out by dipping in distilled water and that no washing was carried out. The results are shown in Table 4.

## Example 17

The hydrophobic treatment was carried out in the same manner as in Example 16 except that a glass plate was used in place of electrodes.

Each visible light transmission (620 nm) of the glass plate before dipping in the electrolyte used in Example 16 and after dipping in the electrolyte for 30 minutes were measured. Further, after washing the dipped glass plate in the same manner as in Example 16, its visible light transmission (620 nm) was measured. The results are shown in Table 4.

## Example 18

In anhydrous toluene was dissolved titanium acylate as a titanium coupling agent (produced by Nippon Soda Co., Ltd., S-152, trade name) to make a concentration of 10%. ITO electrodes were dipped into this solution and circulated for 6 hours, followed by drying to apply the hydrophobic treatment. Visible light transmission (620 nm) of the electrode before the hydrophobic treatment was measured and the result is shown in Table 4.

Into 100 ml of water was added 190 mg of the compound (FEST8) represented by the formula:

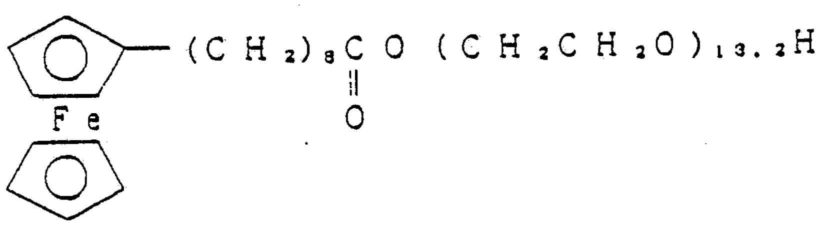

as a micelle forming agent, and to 25 ml of the resulting micelle solution was added 0.1 g of phthalocyanine green (produced by BASF Co., L-9361, trade name) to disperse and dissolve therein.

Subsequently, the solution was stirred by ultrasonic waves for 10 minutes, followed by stirring for 3 days with a stirrer. Into the resulting dispersed micelle solution was added lithium bromide as a supporting salt so that the concentration became 0.1 M, and it was stirred to obtain an electrolyte.

By using this electrolyte as well as by using the ITO transparent glass electrode applied with the above hydrophobic treatment as the anode, a platinum as the cathode and a saturated calomel electrode as the reference electrode, controlled potential electrolysis was carried out at 25° C, at the applied voltage of 0.5 V, and an electric current density of 8.6 $\mu A/cm^2$ for 30 minutes. The amount of electric current that passed therethrough at this time was 0.02 C.

The thus prepared ITO transparent glass electrode on which the thin film was formed was taken out from the electrolyte, followed by drying, and then visible light transmission (620 nm) was each measured with respect that washing was carried out by dipping in distilled water and that no washing was carried out. The results are shown in Table 4.

Example 19

The hydrophobic treatment was carried out in the same manner as in Example 18 except that a glass plate was used in place of electrodes.

Each visible light transmission (620 nm) of the glass plate before dipping in the electrolyte used in Example 18 and after dipping in the electrolyte for 30 minutes were measured. Further, after washing the dipped glass plate in the same manner as in Example 18, its visible light transmission (620 nm) was measured. The results are shown in Table 4.

Example 20

In anhydrous toluene was dissolved a zircoaluminate coupling agent as a coupling agent (produced by Kusumoto Chemical Industries, Ltd., MPM, trade name) to make a concentration of 10%. ITO electrodes were dipped into this solution and circulated for 6 hours, followed by drying to apply the hydrophobic treatment. Visible light transmission (620 nm) of the electrode bebore the hydrophobic treatment was measured and the result is shown in Table 4.

Into 100 ml of water was added 190 mg of FPEG as a micelle forming agent, and to 25 ml of the resulting micelle solution was added 0.1 g of perylene (produced by BASF Co., K-3580, trade name) to disperse and dissolve therein.

Subsequently, the solution was stirred by ultrasonic wave for 10 minutes, followed by stirring for 3 days with a stirrer. Into the resulting dispersed micelle solution was added lithium bromide as a supporting salt so that the concentration became 0.1 M, and it was stirred to obtain an electrolyte.

By using this electrolyte as well as by using the ITO transparent glass electrode applied with the above hydrophobic treatment as the anode, a platinum as the cathode and a saturated calomel electrode as the reference electrode, controlled potential electrolysis was carried out at 25° C, at the applied voltage of 0.5 V and an electric current density of 7.6 $\mu A/cm^2$ for 30 minutes. The amount of electric current that passed therethrough at this time was 0.02 C.

The thus prepared ITO transparent glass electrode on which the thin film was formed was taken out from the electrolyte, followed by drying, and then visible light transmission (620 nm) was each measured with respect that washing was carried out by dipping in distilled water and that no washing was carried out. The results are shown in Table 4.

Example 21

The hydrophobic treatment was carried out in the same manner as in Example 20 except that a glass plate was used in place of electrodes.

Each visible light transmission (620 nm) of the glass plate before dipping in the electrolyte used in Example 20 and after dipped in the electrolyte for 30 minutes were measured.

Further, after washing the dipped glass plate in the same manner as in Example 20, its visible light transmission (620 nm) was measured. The results are shown in Table 4.

Example 22

In anhydrous toluene was dissolved an aluminum coupling agent as a coupling agent (produced by Ajinomoto K.K., AL-M, trade name) to make a concentration of 10%. ITO electrodes were dipped into this solution and circulated for 6 hours, followed by drying to apply the hydrophobic treatment. Visible light transmission (620 nm) of the electrode before the hydrophobic treatment was measured and the result is shown in Table 4.

Into 100 ml of water was added 190 mg of FEST9 as a micelle forming agent, and to 25 ml of the resulting micelle solution was added 0.1 g of alpha-copper phthalocyanine (produced by Dainichi Seika Co., Pc-Al, trade name) to disperse and dissolve therein.

Subsequently, the solution was stirred by ultrasonic waves for 10 minutes, followed by stirring for 3 days with a stirrer. Into the resulting dispersed micelle solution was added lithium bromide as a supporting salt so that the concentration became 0.1 M, and it was stirred to obtain an electrolyte.

By using this electrolyte as well as by using the ITO transparent glass electrode applied with the above

hydrophobic treatment as the anode, a platinum as the cathode and a saturated calomel electrode as the reference electrode, controlled potential electrolysis was carried out at 25° C, at the applied voltage of 0.5 V and an electric current density of 9.6 $\mu A/cm^2$ for 30 minutes. The amount of electric current that passed therethrough at this time was 0.02 C.

The thus prepared ITO transparent glass electrode on which the thin film was formed was taken out from the electrolyte, followed by drying, and then visible light transmission (620 nm) was each measured with respect that washing was carried out by dipping in distilled water and that no washing was carried out. The results are shown in Table 4.

Example 23

The hydrophobic treatment was carried out in the same manner as in Example 22 except that a glass plate was used in place of electrodes.

Each visible light transmission (620 nm) of the glass plate before dipping in the electrolyte used in Example 22 and after dipping in the electrolyte for 30 minutes were measured. Further, after washing the dipped glass plate in the same manner as in Example 22, its visible light transmission (620 nm) was measured. The results are shown in Table 4.

Example 24

In anhydrous toluene was dissolved $(C_3H_7O)_4Zr$ (produced by Diamond Novel Japan Co., IPZ, trade name) as a zirconium coupling agent to make a concentration of 10%. ITO electrodes were dipped into this solution and circulated for 6 hours, followed by drying to apply the hydrophobic treatment. Visible light transmission (620 nm) of the electrode before the hydrophobic treatment was measured and the result is shown in Table 4.

Next, into 100 ml of water was added 190 mg of FEST8 as a micelle forming agent, and to 25 ml of the resulting micelle solution was added 0.1 g of Ba-lake pigment (produced by Dainichi Seika Co., Pc-Al, trade name) to disperse and dissolve therein.

Subsequently, the solution was stirred by ultrasonic waves for 10 minutes, followed by stirring for 3 days by a stirrer. Into the resulting dispersed micelle solution was added lithium bromide as a supporting salt so that the concentration became 0.1 M, and it was stirred to obtain an electrolyte.

By using this electrolyte as well as by using the ITO transparent glass electrode applied with the above hydrophobic treatment as the anode, a platinum as the cathode and a saturated calomel electrode as the reference electrode, controlled potential electrolysis was carried out at 25° C, at the applied voltage of 0.5 V and an electric current density of 3.6 $\mu A/cm^2$ for 30 minutes. The amount of electric current that passed therethrough at this time was 0.01 C.

The thus prepared ITO transparent glass electrode on which the thin film was formed was taken out from the electrolyte, followed by drying, and then visible light transmission (620 nm) was each measured with respect that washing was carried out by dipping in distilled water and that no washing was carried out. The results are shown in Table 4.

Example 25

The hydrophobic treatment was carried out in the same manner as in Example 24 except that a glass plate was used in place of electrodes.

Each visible light transmission (620 nm) of the glass plate before dipping in the electrolyte used in Example 24 and after dipping in the electrolyte for 30 minutes were measured. Further, after washing the dipped glass plate in the same manner as in Example 24, its visible light transmission (620 nm) was measured. The results are shown in Table 4.

Table 4

| | Visible light transmission (%) | | | |
|---|---|---|---|---|
| | Before electrolysis | | | |
| No. | Before dipping | After dipping | After electrolysis and before washing | After washing |
| Example 14 | 86 | - | 9 | 12 |
| Example 15 | 93 | 85 | - | 91 |
| Example 16 | 85 | - | 9 | 15 |
| Example 17 | 94 | 85 | - | 92 |
| Example 18 | 84 | - | 9 | 14 |
| Example 19 | 93 | 85 | - | 92 |
| Example 20 | 85 | - | 8 | 9 |
| Example 21 | 93 | 78 | - | 91 |
| Example 22 | 84 | - | 7 | 9 |
| Example 23 | 93 | 84 | - | 92 |
| Example 24 | 86 | - | 11 | 12 |
| Example 25 | 92 | 78 | - | 90 |

Example 26

Into 25 ml of the micelle forming solution obtained by adding 0.19 g of FPEG to 100 ml of water was added 0.2 g of phthalocyanine to disperse and dissolve therein. Then, the solution was stirred by ultrasonic waves for 10 minutes, followed by stirring for 3 days with a stirrer. Into the resulting dispersed micelle solution were added polyethylene glycol as a film structure reinforcing agent and also LiBr so that the concentration became 0.1 M. ITO electrode were dipped into this solution and by using a platinum as the opposite electrode and a saturated calomel electrode as the reference electrode, controlled potential electrolysis was carried out at 0.5 V for 30 minutes to obtain a thin film.

This thin film was baked at 140° C for one hour in an electric furnace and dipped in the dispersed micelle solution, but no change was observed even after one hour. The results of the measuring the change of the transmission before and after dipping showed that 12% by weight of the film was dissolved out.

Example 27

A thin film was obtained in the same manner as in Example 26 except that perylene (produced by BASF Co., K3580, trade name) was used in place of phthalocyanine and that 1 cc of pyrrole was added as a film structure reinforcing agent.

After formation of the film, an electric potential was raised to 1.0 V and electrolysis was carried out for 10 minutes to conduct electrolytic polymerization of pyrrole. Thereafter, electrolysis was carried out, and the resulting thin film was baked at 180° C for one hour in an electric furnace and then dipped in a dispersed micelle solution, but no change was observed even after one hour. The results of measuring the change of the transmission before and after dipping showed that 2% by weight of the film was dissolved out.

Example 28

A thin film was obtained in the same manner as in Example 26 except that $PcCuCl_8Br_8$ (produced by BASF Co., L9361, trade name) was used in place of phthalocyanine and that 0.5 cc of a methanol solution containing 10 mM ployvinylalcohol was added as a film structure reinforcing agent.

Thereafter, the resulting thin film was baked at 160° C for one hour in an electric furnace and then dipped in a dispersed micelle solution, but no change was observed even after one hour. The results of measuring the change of the transmission before and after dipping showed that 3% by weight of the film

was dissolved out.

Example 29

A thin film was obtained in the same manner as in Example 26 except that copper phthalocyanine (produced by BASF Co., K6902, trade name) was used in place of phthalocyanine and that 1.0 cc of a methanol solution of 10 mM polyvinylbutyral was added as a film structure reinforcing agent.

The resulting thin film was baked at 150 °C for one hour in an electric furnace and then dipped in a dispersed micelle solution, but no change was observed even after one hour. The results of measuring the change of the transmission before and after dipping showed that 10% by weight of the film was dissolved out.

Example 30

A thin film was obtained in the same manner as in Example 26 except that Ba-lake pigment (produced by BASF Co., K3700, trade name) was used in place of phthalocyanine and that 1.0 cc of a methanol solution of 10 mM polymethylmethacrylate was added as a film structure reinforcing agent.

The resulting thin film was baked at 130 °C for one hour in an electric furnace and then dipped in a dispersed micelle solution, but no change was observed even after one hour. The results of measuring the change of the transmission before and after dipping showed that 5% by weight of the film was dissolved out.

Example 31

A thin film was obtained in the same manner as in Example 26 except that alpha-copper phthalocyanine (produced by Dainichi Seika Co., Ltd., PC-Al, trade name) was used in place of phthalocyanine and 0.1 cc of vinyl acetate adhesive was added as a film structure reinforcing agent.

The resulting thin film was baked at 100 °C for one hour in an electric furnace and then dipped in a dispersed micelle solution, but no change was observed even after one hour. The results of measuring the change of the transmission before and after dipping showed that 3% by weight of the film was dissolved out.

Example 32

A thin film was obtained in the same manner as in Example 26 except that beta-copper phthalocyanine (produced by Dainichi Seika Co., Ltd., Pc-B1, trade name) was used in place of phthalocyanine and that 1 cc of an acetone solution of 10 mM epoxy resin adhesive was added as a film structure reinforcing agent.

The resulting thin film was baked at 130 °C for one hour in an electric furnace and then dipped in a dispersed micelle solution, but no change was observed even after one hour. The results of measuring the change of the transmission before and after dipping showed that 8% by weight of the film was dissolved out.

Example 33

Into 25 ml of the micelle forming solution obtained by adding 0.19 g of FPEG as a nonionic micelle forming agent to 100 ml of water was added 0.2 g of copper phthalocyanine (produced by BASF Co., K6902, trade name) to dispserse and dissolve therein. Then, the solution was stirred by ultrasonic waves for 10 minutes, followed by stirring for 3 days with a stirrer. To the resulting dispersed micelle solution were added LiBr so that the concentration became 0.1 M.

ITO electrodes were dipped into this solution, and by using a platinum as the opposite electrode and a saturated calomel electrode as the reference electrode, controlled potential electrolysis was carried out at 0.5 V 30 minutes to obtain a thin film.

The thin film thus obtained was baked at 200 °C for one hour in an electric furnace and dipped in the

dispersed micelle solution but change has been observed even after one hour. The results of measuring the change of the transmission before and after dipping showed that 12% by weight of the film was dissolved out.

Example 34

A thin film was obtained in the same manner as in Example 33 except for baking treatment at 400 °C for 30 minutes in an electric furnace instead of at 200°C for 1 hour. The resulting thin film was dipped in a dispersed micelle solution, but no change was observed even after one hour. The results of measuring the change of the transmission before and after dipping showed that 3% by weight of the film was dissolved out.

Example 35

A thin film was obtained in the same manner as in Example 33 except for using $PcCuCl_8Br_8$ (produced by BASF Co., L9360, trade name) in place of copper phthalocyanine (produced by BASF Co., K6902, trade name).

The resulting thin film was baked at 200°C for one hour in an electric furnace and then dipped in a dispersed micelle solution, but no change was observed even after one hour. The results of measuring the change of the transmission before and after dipping showed that 4% by weight of the film was dissolved out.

Example 36

A thin film was obtained in the same manner as in Example 35 except for baking treatment at 300 °C for 30 minutes in an electric furnace instead of at 200°C for 1 hour. The resulting thin film was dipped in a dispersed micelle solution, but no change was observed even after one hour. The results of measuring the change of the transmission before and after dipping showed that 1% by weight of the film was dissolved out.

Example 37

A thin film was obtained in the same manner as in Example 33 except for using perylene produced by BASF Co., K3580, trade name) in place of copper phthalocyanine produced by BASF Co., K6902, trade name).

The resulting thin film was baked at 150°C for one hour in an electric furnace and then dipped in a dispersed micelle solution, but no change was observed even after one hour. The results of measuring the change of the transmission before and after dipping showed that 18% by weight of the film was dissolved out.

Example 38

A thin film was obtained in the same manner as in Example 37 except for baking treatment at 300 °C for 30 minutes in an electric furnace instead of at 150°C for 1 hour. The resulting thin film was dipped in a dispersed micelle solution, but no change was observed even after one hour. The results of measuring the change of the transmission before and after dipping showed that 12% by weight of the film was dissolved out.

Example 39

A thin film was obtained in the same manner as in Example 33 except for using lake pigment (produced by BASF Co., K3700, trade name) in place of copper phthalocyanine (produced by BASF Co., K6902, trade

name).

The resulting thin film was baked at 250 °C for one hour in an electric furnace and then dipped in a dispersed micelle solution, but no change was observed even after one hour. The results of measuring the change of the transmission before and after dipping showed that 27% by weight of the film was dissolved out.

Example 40

A thin film was obtained in the same manner as in Example 39 except for baking treatment at 300 °C for 30 minutes in an electric furnace instead of at 250 °C for 1 hour. The resulting thin film was dipped in a dispersed micelle solution, but no change was observed even after one hour. The results of measuring the change of the transmission before and after dipping showed that 22% by weight of the film was dissolved out.

## Claims

1. A process for producing a color display material in which a hydrophobic dye or pigment film is formed on a transparent electrode, which comprises dissolving or dispersing a hydrophobic dye or pigment in an aqueous medium by using a micelle forming agent composed of a ferrocene derivative, and then electrolyzing the resulting micelle solution or dispersion to form a thin film of said dye or pigment on the transparent electrode.

2. A process for producing a color filter in which a hydrophobic dye or pigment film is formed on a transparent electrode, which comprises dissolving or dispersing a hydrophobic dye or pigment in an aqueous medium by using a micelle forming agent composed of a ferrocene derivative, and then electrolyzing the resulting micelle solution or dispersion to form a thin film of said dye or pigment on the transparent electrode.

3. A process according to Claim 1 or 2, wherein said hydrophobic dye or pigment is a red dye or pigment, a green dye or pigment or a blue dye or pigment.

4. A process according to Claim 1 or 2, wherein said hydrophobic dye or pigment is a perylene type pigment, a lake pigment, an azo type pigment, a quinacridone type pigment, an anthraquinone type pigment or an anthracene type pigment as a red dye or pigment; a halogen-poly-substituted phthalocyanine type pigment, a halogen-poly-substituted copper phthalocyanine type pigment or a triphenylmethane type basic dye or pigment as a green pigment; and a copper phthalocyanine type pigment, an indanthrone type pigment, an indophenol type pigment or a cyanine type pigment as a blue dye or pigment.

5. A process according to Claim 1 or 2, wherein the surface of the transparent electrode is subjected to hydrophobic treatment.

6. A process according to Claim 5, wherein said hydrophobic treatment is carried out by using a coupling agent.

7. A process according to Claim 1 or 2, wherein a film structure reinforcing agent is added to the micelle solution or dispersion.

8. A process for producing a color display material which comprises subjecting the thin film of Claim 1 to baking treatment.

9. A process for producing a color filter which comprises subjecting the thin film of Claim 2 to baking treatment.

10. A process for producing a color display material for forming a plural number of thin films composed of a hydrophobic substance by a Micellar Disruption Method on the surface of a plural pair of electrodes which are subjected to patterning with such a shape that having a plural group of taken-out portions which are different in taken-out portions with each group on an insulating substrate, which comprises providing an extended electrode composed of a base metal at the taken-out portion of a pair of electrodes, forming a thin film of the hydrophobic substance on said electrode by the Micellar Disruption Method by connecting said extended electrode at the taken-out portion of said pair of electrodes and a taken-out electrode, then selectively removing the extended electrode of the pair of electrodes on which said thin film is formed so as to not cause short-circuiting when taken-out portion of other pair of electrode and a taken-out electrode are connected, then forming a thin film of the other hydrophobic substance on the other pair of electrodes by the Micellar Disruption Method by connecting the extended portions of the other pair of electrodes and taken-out electrode, and forming a plural number of thin films of hydrophobic substances on a plural

number of electrodes by repeating the above procedure with necessary times.

11. A process for producing a color filter for forming a plural number of thin films composed of a hydrophobic substance by a Micellar Disruption Method on the surface of a plural pair of electrodes which are subjected to patterning with such a shape that having a plural group of taken-out portions which are different in taken-out portions with each group on an insulating substrate, which comprises providing an extended electrode composed of a base metal at the taken-out portion of a pair of electrodes, forming a thin film of the hydrophobic substance on said electrode by the Micellar Disruption Method by connecting said extended electrode at the taken out portion of said pair of electrodes and a taken-out electrode, then selectively removing the extended electrode of the pair of electrodes on which said thin film is formed so as to not cause short-circuiting when taken-out portion of other pair electrode and a taken-out electrode are connected, then forming a thin film of the other hydrophobic substance on the other pair of electrodes by the Micellar Disruption Method by connecting the extended portions of the other pair of electrodes and taken out electrode, and forming a plural number of thin films of hydrophobic substances on a plural number of electrodes by repeating the above procedure with necessary times.

Fig. 1

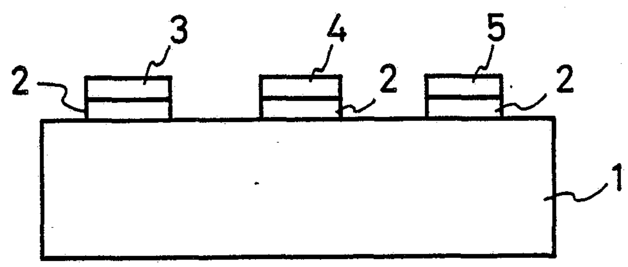

Fig. 2

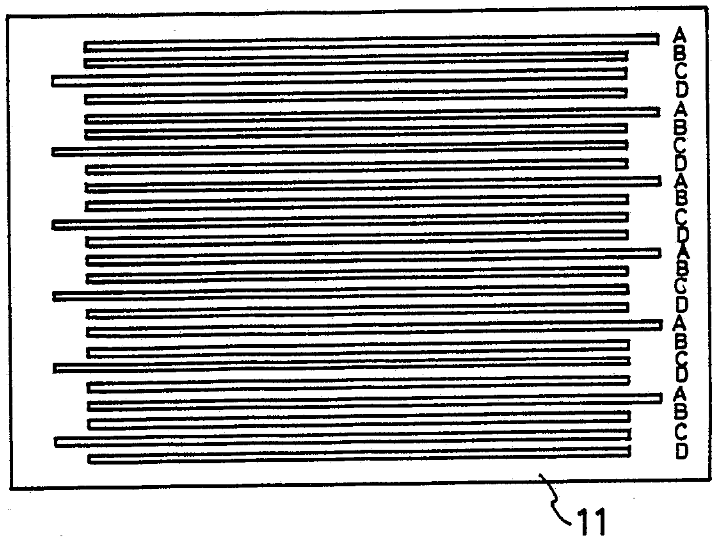


Fig. 3

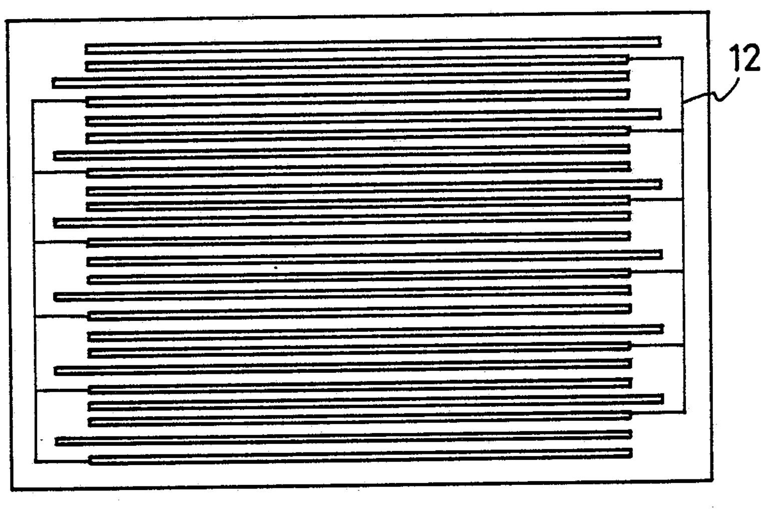


Fig. 4

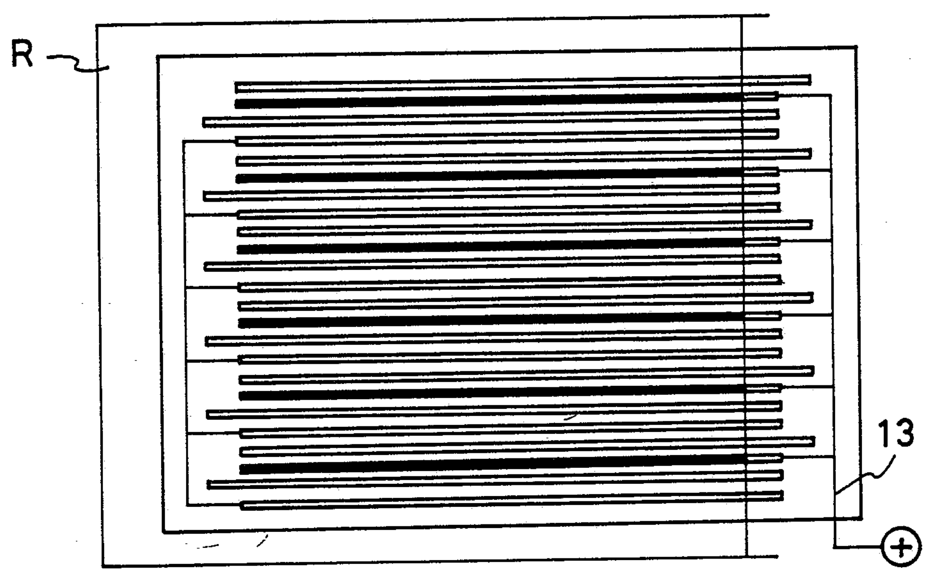

Fig. 5

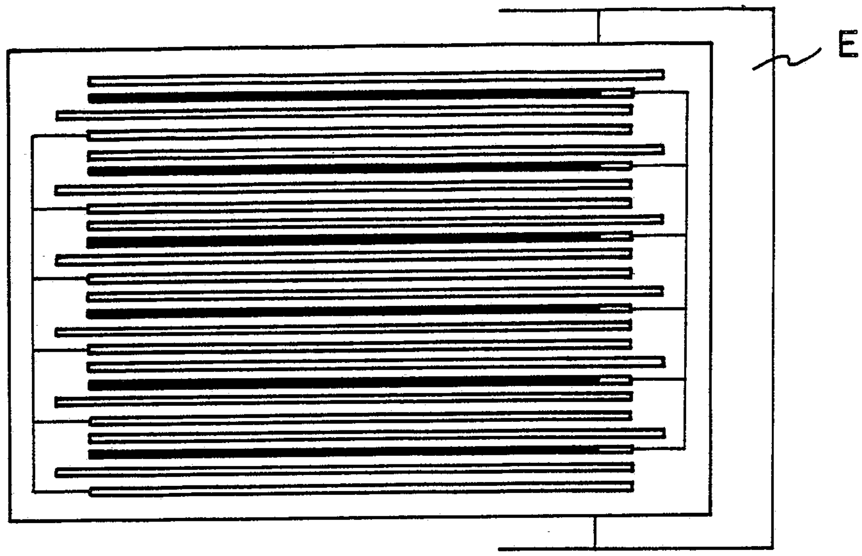


Fig. 6

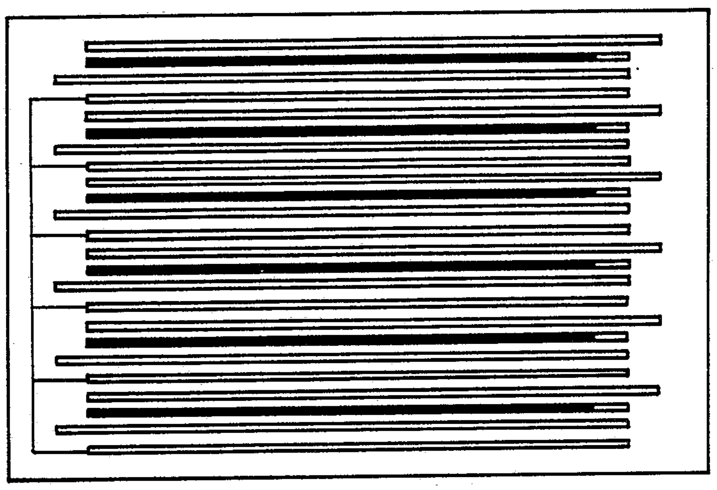

Fig. 7

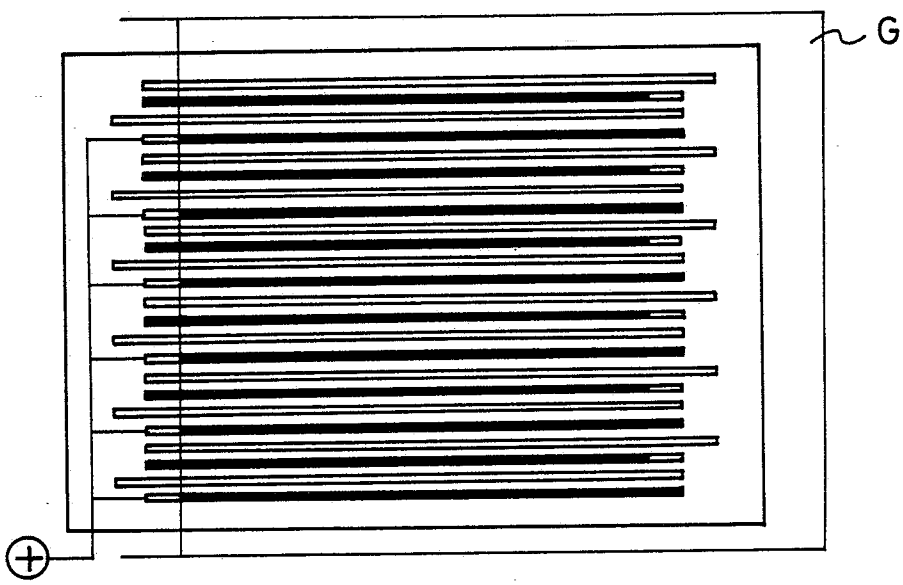

Fig. 8

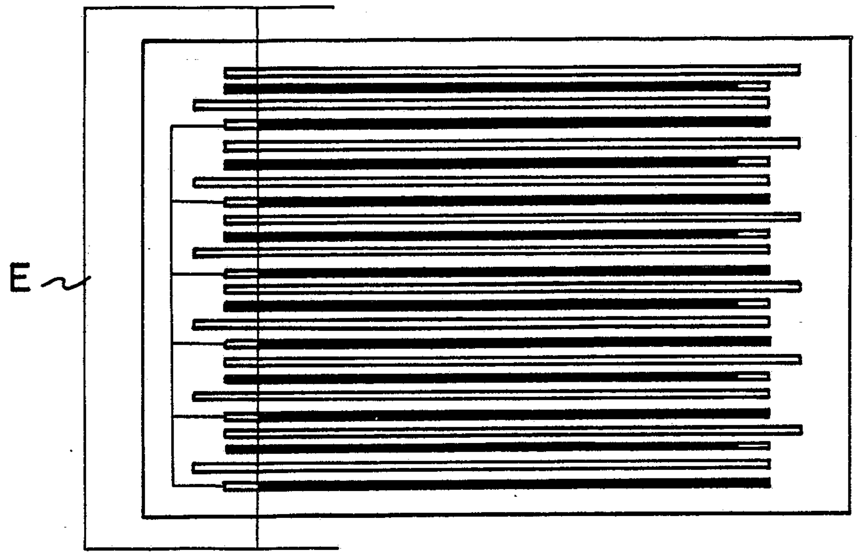


Fig.9

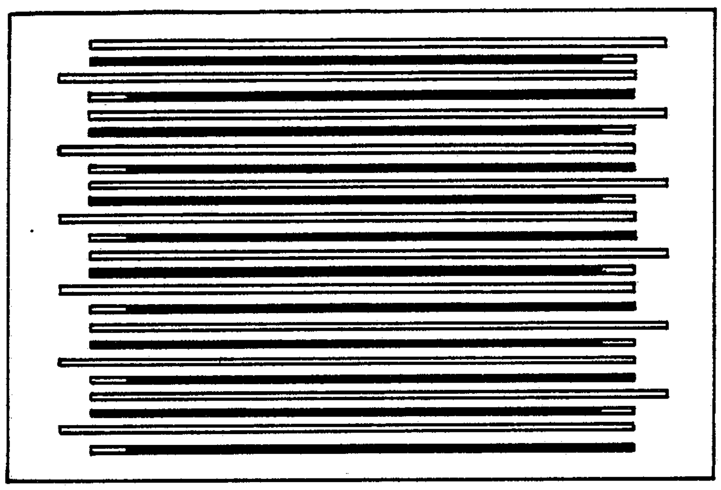

Fig.10

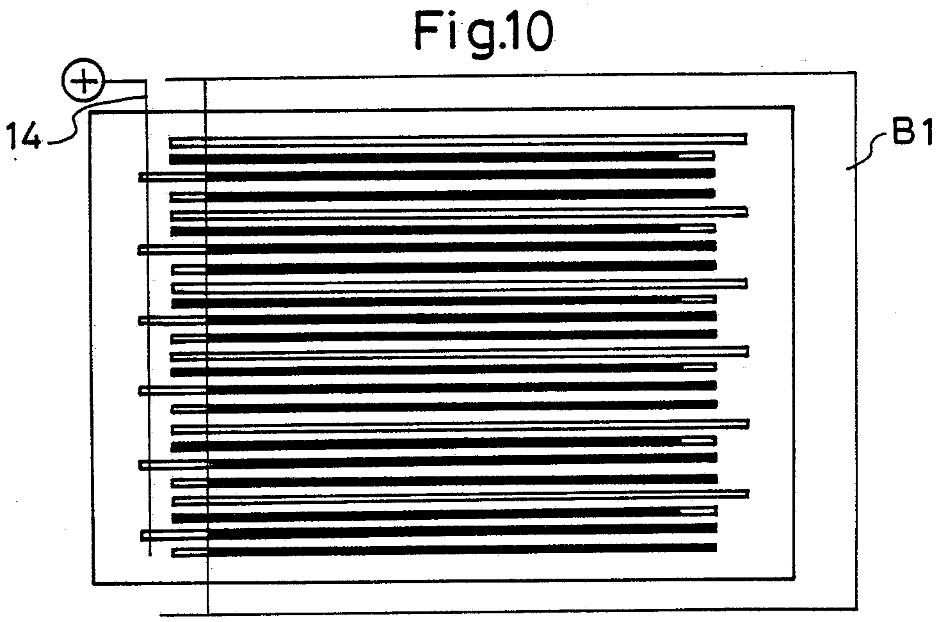

Fig.11

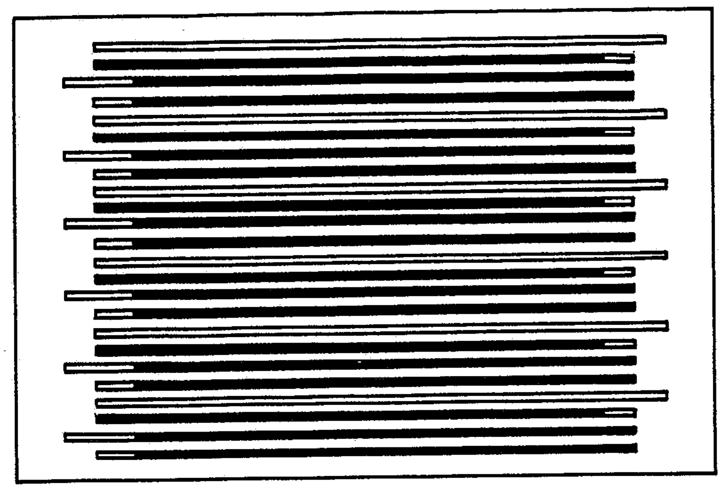

Fig.12

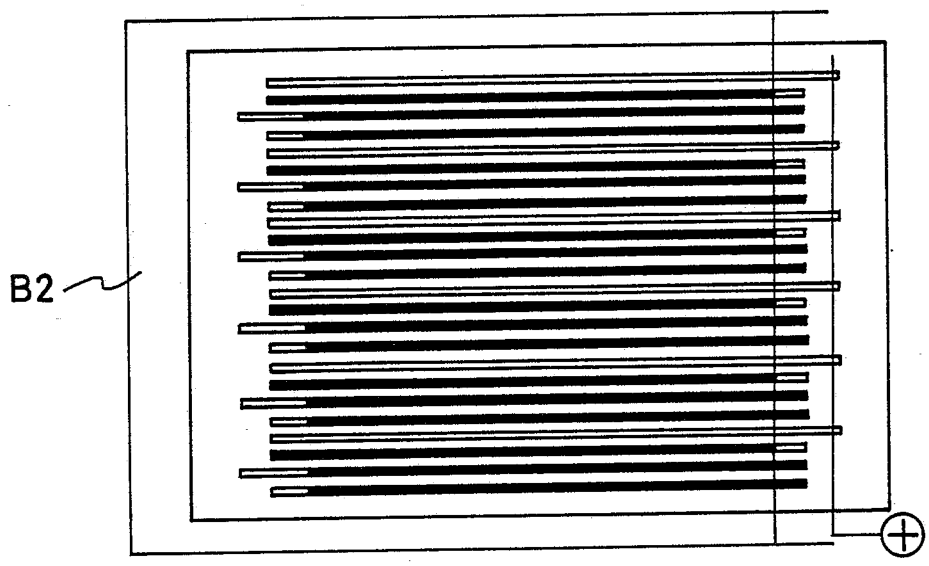


Fig.13

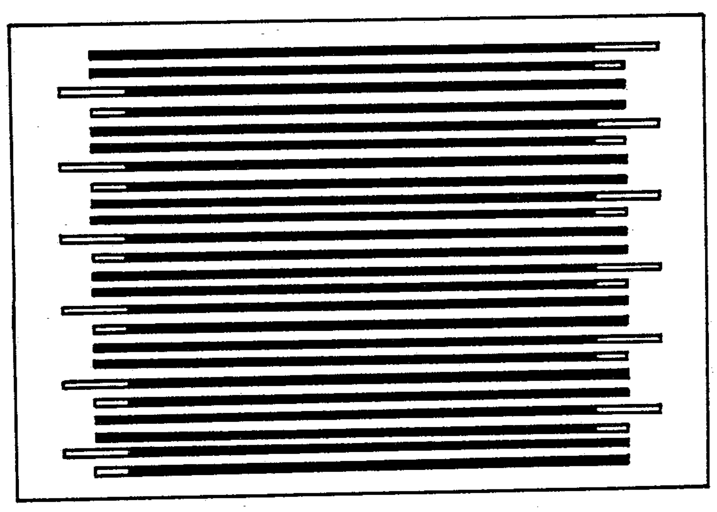

Fig.14

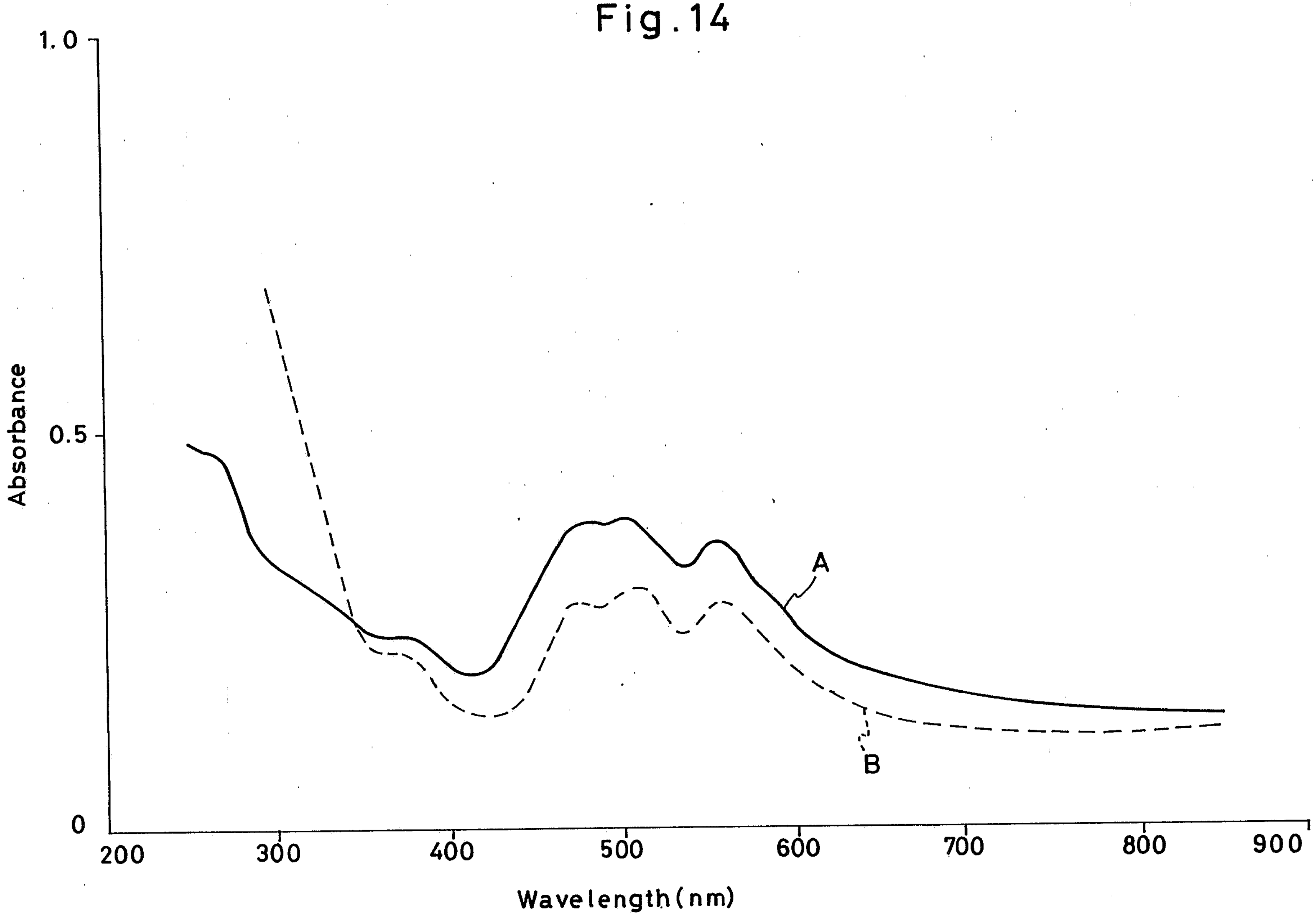
1.0
0.5
0
Absorbance
200
300
400
500
600
700
800
900
Wavelength(nm)
A
B

Fig. 15

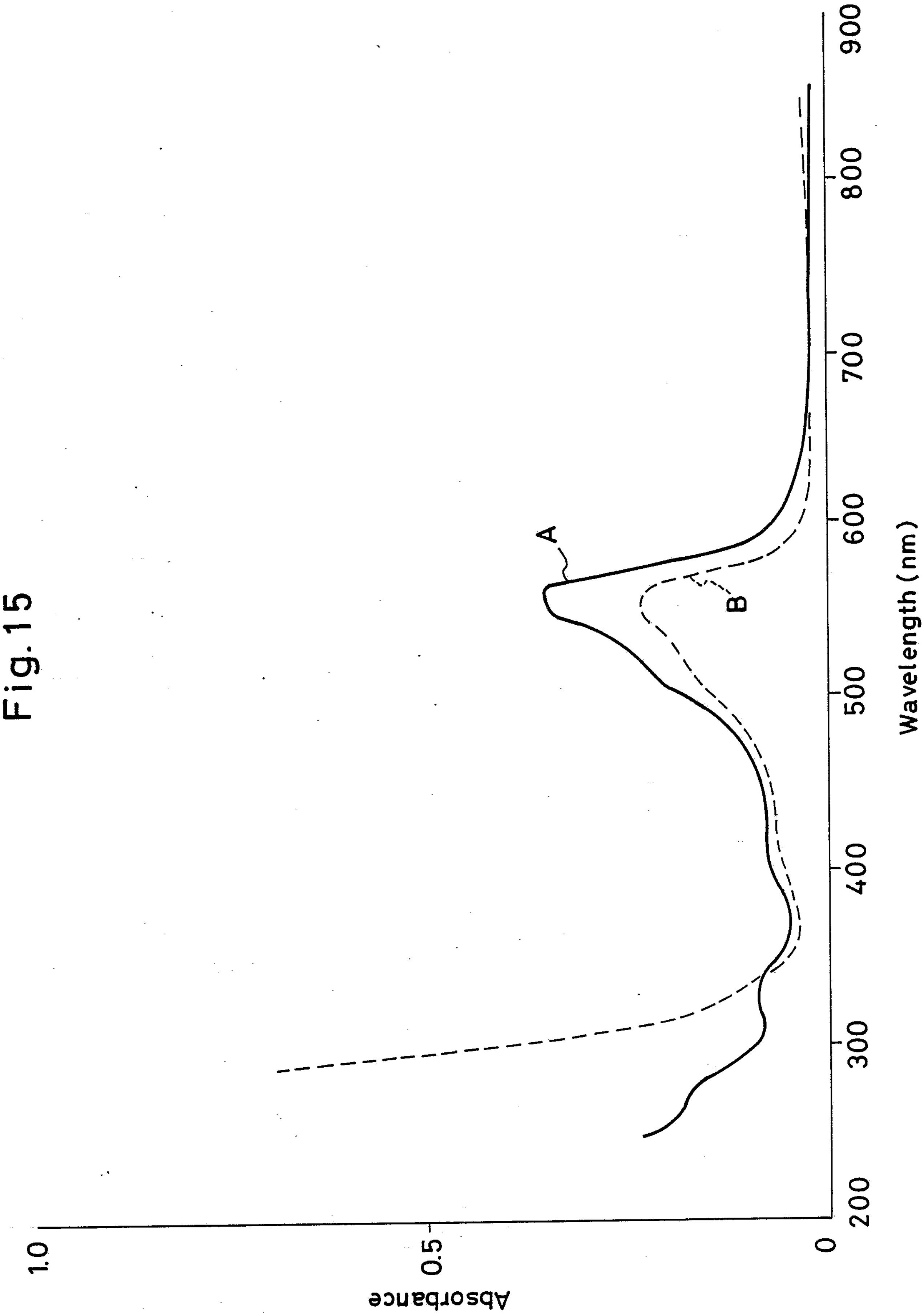

Absorbance
1.0
0.5
0
200
300
400
500
600
700
800
900
Wavelength (nm)
A
B

Fig.16

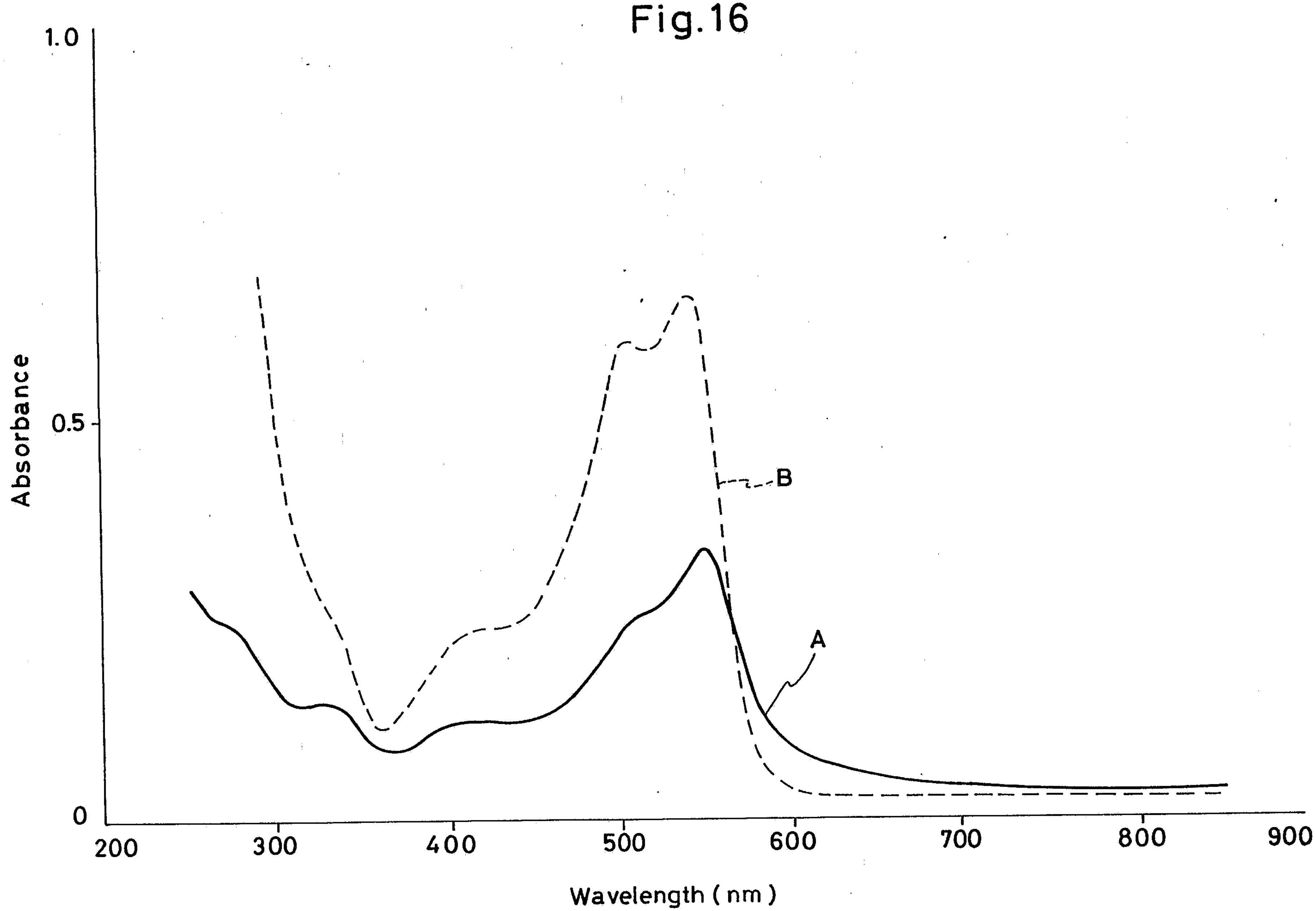
1.0
0.5
0
Absorbance
200
300
400
500
600
700
800
900
Wavelength ( nm )
A
B

Fig.17

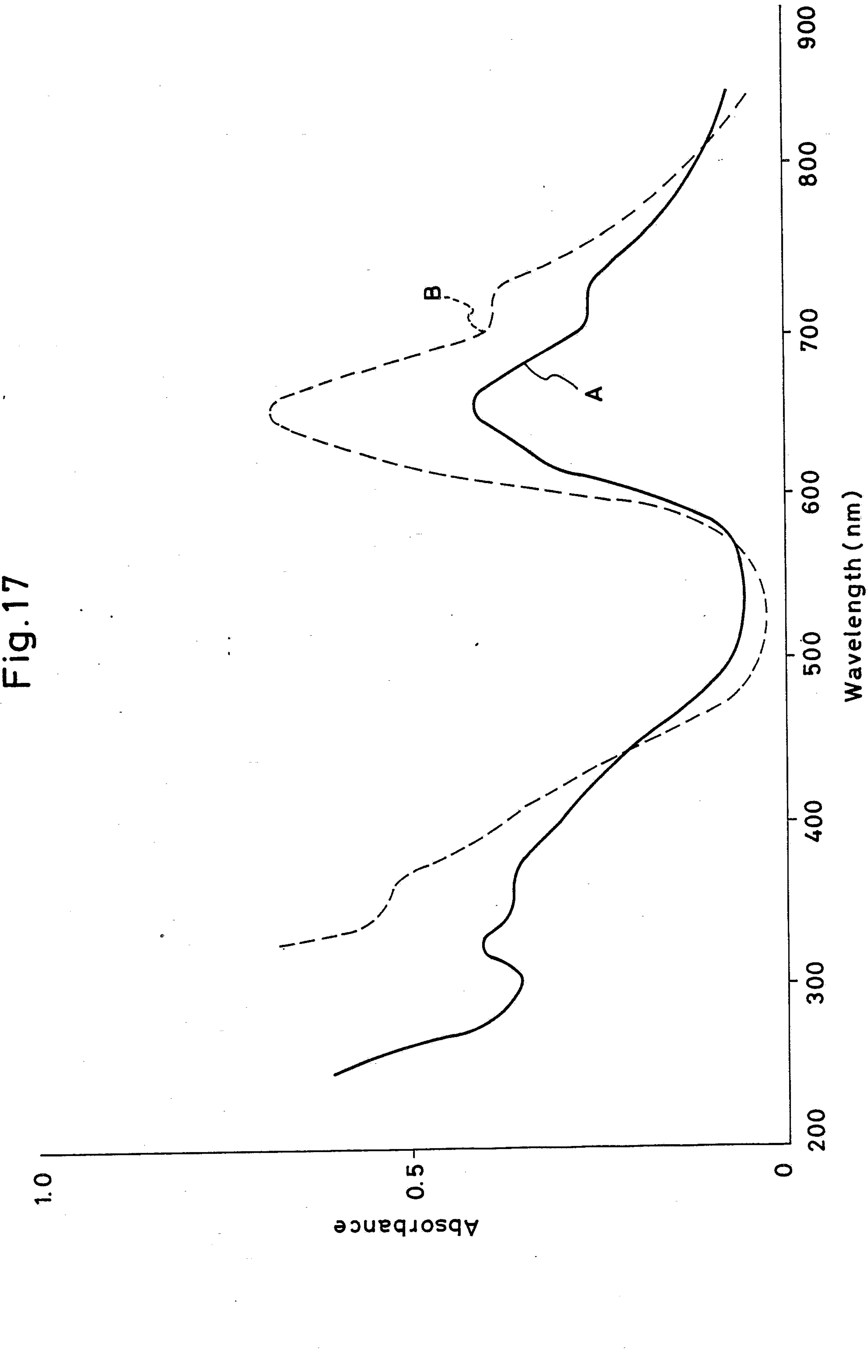

Absorbance
1.0
0.5
0
Wavelength (nm)
200
300
400
500
600
700
800
900
A
B

Fig.18

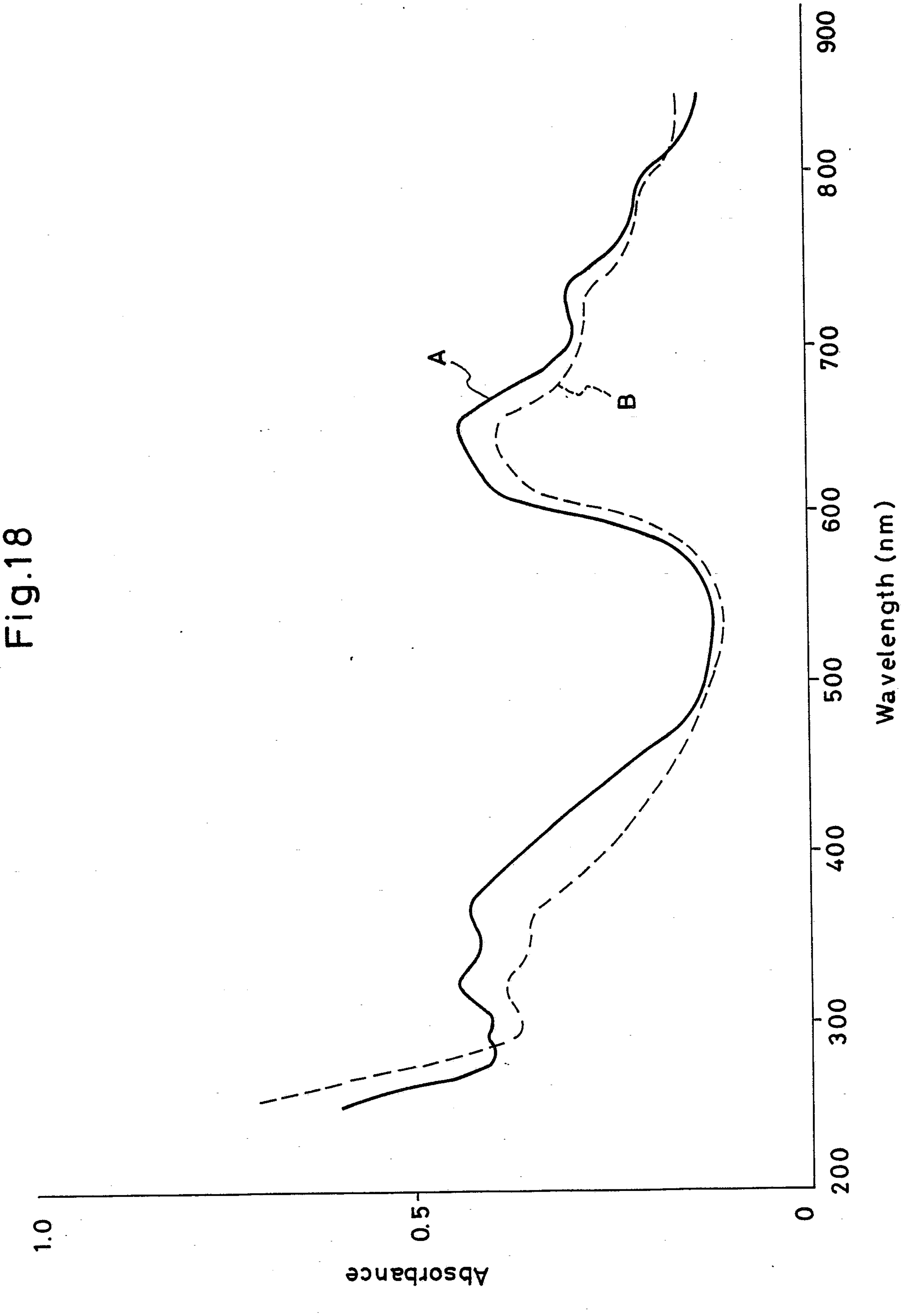
Absorbance
1.0
0.5
0
200
300
400
500
600
700
800
900
Wavelength (nm)
A
B

Fig.19

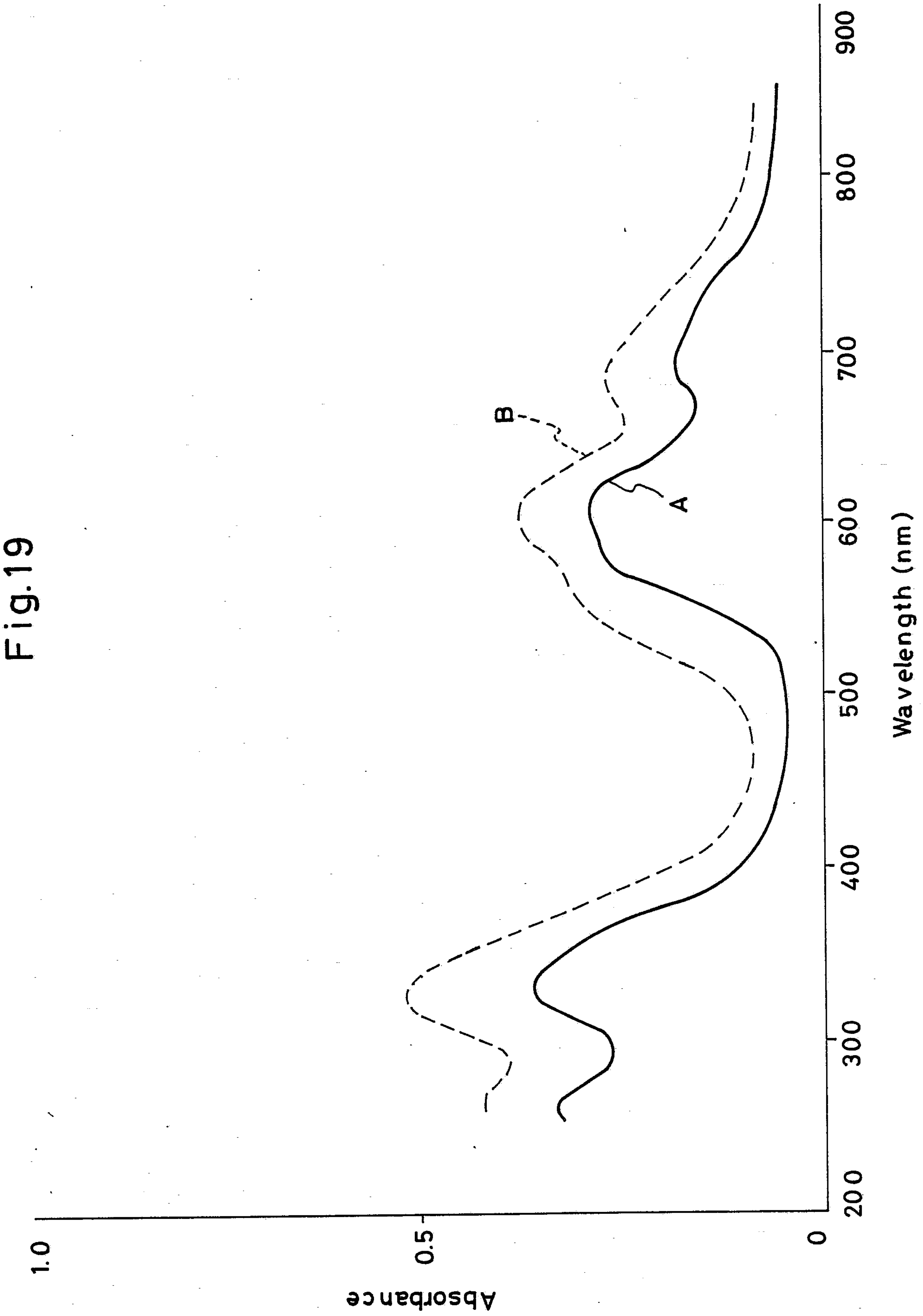
Absorbance
1.0
0.5
0
200
300
400
500
600
700
800
900
Wavelength (nm)
A
B

Fig.20

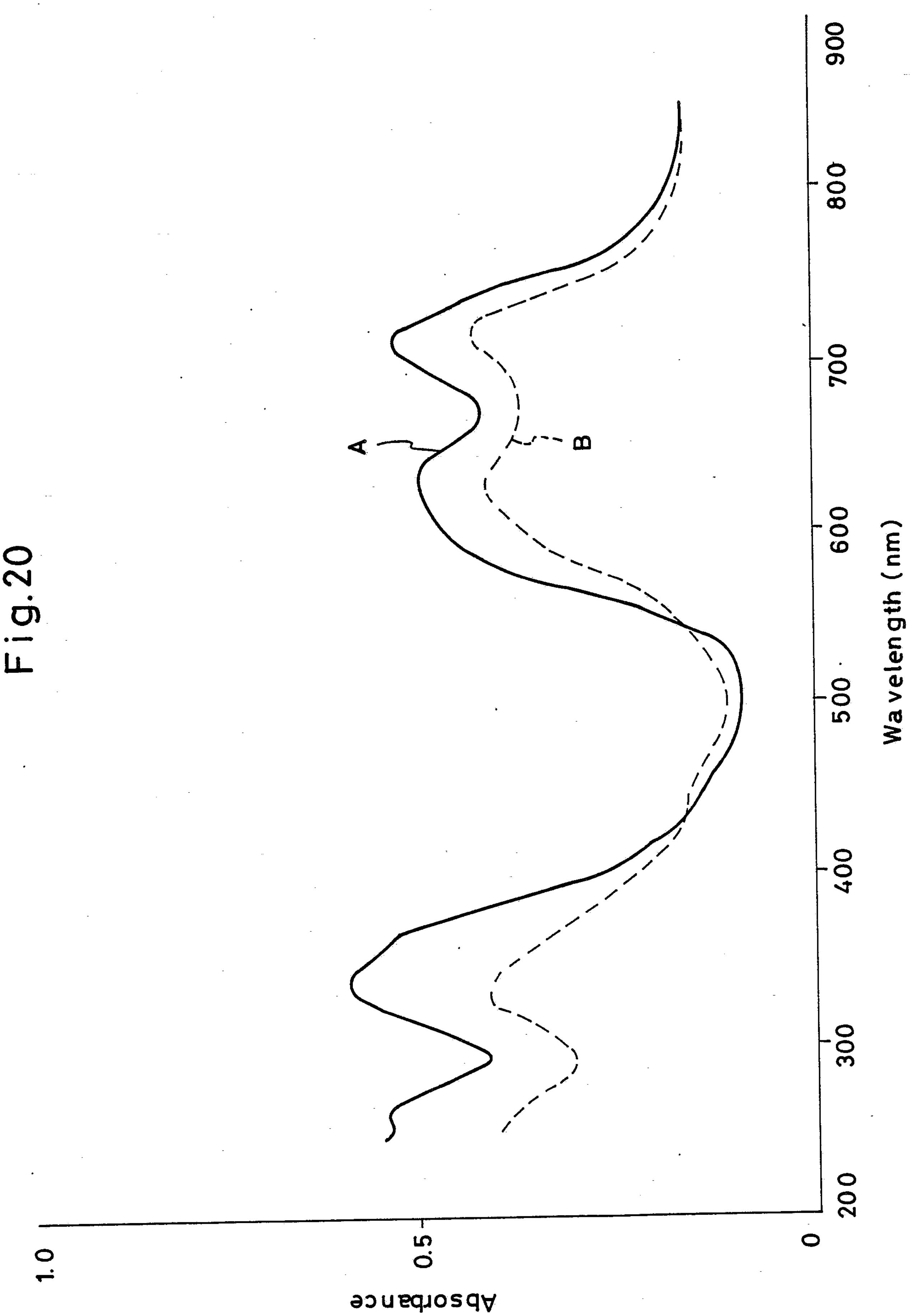
A
B
1.0
0.5
0
Absorbance
200
300
400
500
600
700
800
900
Wavelength (nm)

Fig. 21

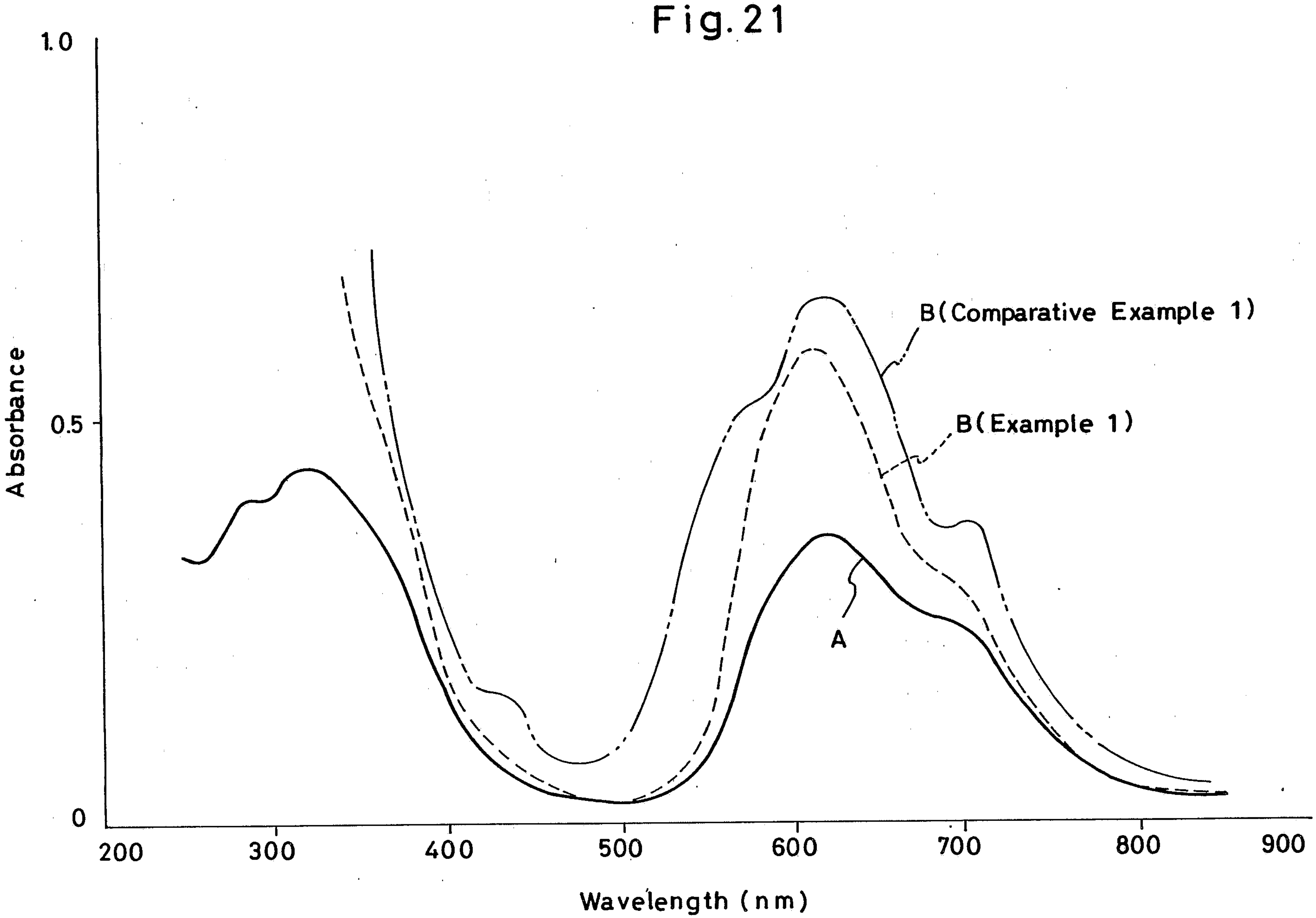

1.0
0.5
0
Absorbance
200
300
400
500
600
700
800
900
Wavelength (nm)
B(Comparative Example 1)
B(Example 1)
A

Fig.22

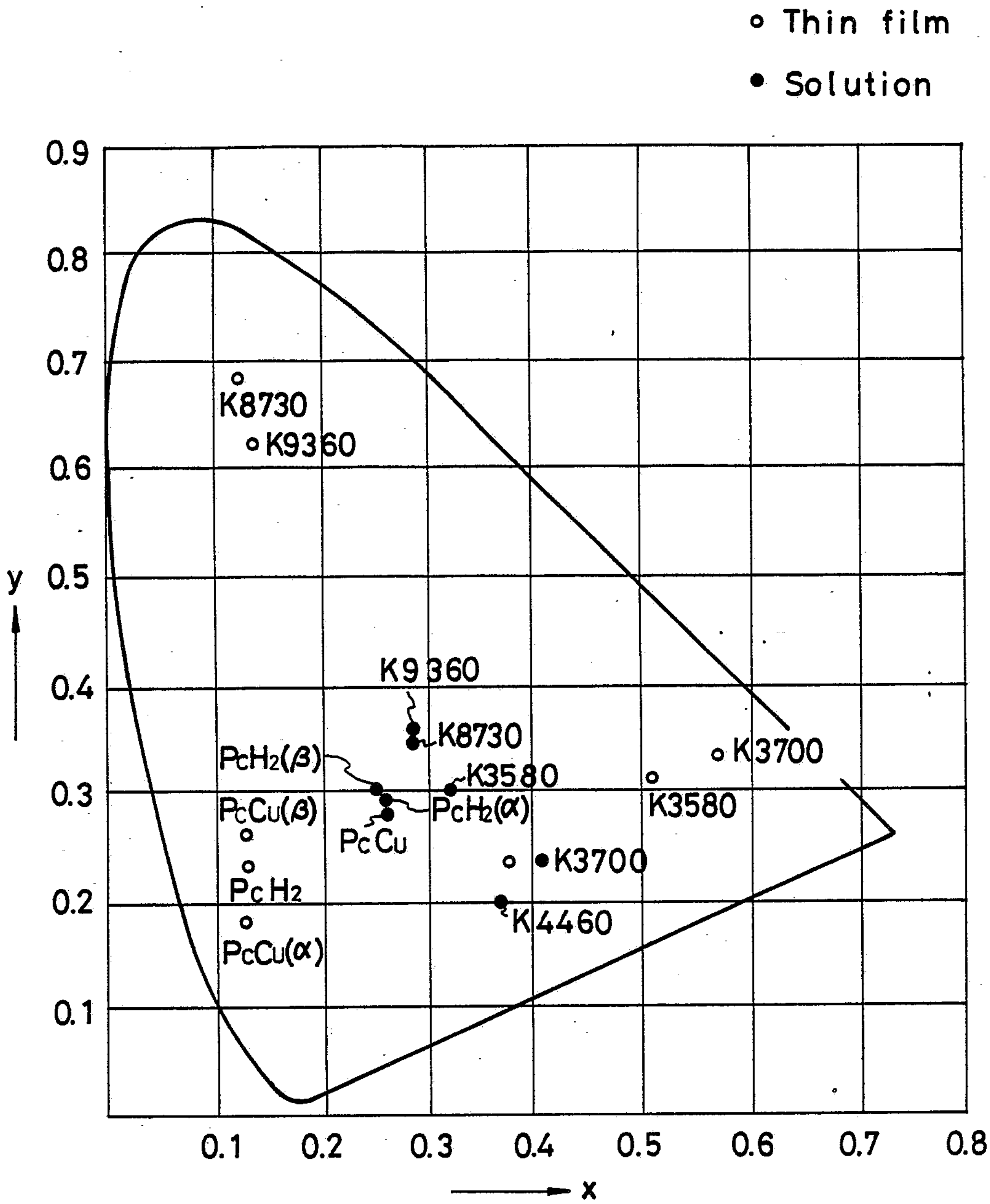

○ Thin film
● Solution
0.9
0.8
0.7
0.6
0.5
0.4
0.3
0.2
0.1
y
K8730
K9360
K9360
K8730
K3700
PcH2(β)
K3580
PcCu(β)
PcH2(α)
K3580
PcCu
K3700
PcH2
K4460
PcCu(α)
0.1
0.2
0.3
0.4
0.5
0.6
0.7
0.8
x